# EUROPEAN PATENT APPLICATION

(11) **EP 4 838 954 A1**
(43) Date of publication of application: **11.11.2026**
(21) Application number: 24915697.7
(22) Date of filing: 18.12.2024
(51) Int. Cl.: H04W 36/18, H04W 24/04, H04W 36/08, H04W 36/12, H04W 76/10, H04W 76/30, H04W 88/14

(54) **COMMUNICATION SYSTEM**

(30) Priority: 05.01.2024 JP 2024000636
(71) Applicant: Mitsubishi Electric Corporation, Tokyo 100-8310 (JP)
(72) Inventor: SHIMODA, Tadahiro, Tokyo 100-8310 (JP); MOCHIZUKI, Mitsuru, Tokyo 100-8310 (JP)
(74) Representative: Mewburn Ellis LLP
(86) International application number: PCT/JP2024/044750
(87) International publication number: WO 2025/146774

(57) **Abstract**

A communication system includes an anchor network being a network having a user plane function that directly connects to a data network as a data transmission and reception target of a communication terminal, and a non-anchor network being a network that connects to the data network via the anchor network, the communication terminal being configured to, when the communication terminal switches the network to be connected to, by using a plurality of protocol stacks, transition to a state of performing communication with the data network by connecting to both of the anchor network and the non-anchor network, and then terminate communication with the data network via a switching source network.

## Description

### Technical Field

The present disclosure relates to a radio communication technology.

### Background

In the 3rd Generation Partnership Project (3GPP) being a standard organization of mobile communication systems, a fifth generation (which may be hereinafter referred to as "5G") radio access system is studied (for example, NPL 2) as a successor to Long Term Evolution (LTE) and Long Term Evolution Advanced (LTE-A) being one of fourth generation radio access systems (see NPL 1). A technology of 5G radio sections is referred to as "New Radio Access Technology" ("New Radio" is abbreviated to "NR"). The NR system has been studied, based on the LTE system and the LTE-A system.

For example, in Europe, requirements for 5G are summarized in an organization named METIS (see NPL 3). The 5G radio access system is required to implement lower power consumption and lower apparatus costs, making its system capacity 1000 times as high as, data transmission rate 100 times as high as, data processing delay one fifth (1/5) of, and number of simultaneously connected communication terminals 100 times as large as those of the LTE system (see NPL 3).

To satisfy these requirements, in 3GPP, standardization of 5G has been studied (see NPLs 4 to 23).

As NR access schemes, orthogonal frequency division multiplexing (OFDM) is used in a downlink direction, and OFDM and discrete Fourier transform-spread-OFDM (DFT-s-OFDM) are used in an uplink direction. As with LTE and LTE-A, the 5G system employs only a packet communication method, without including circuit switching.

In NR, frequencies higher than those in LTE are available in order to enhance the transmission rate and reduce the processing delay.

In NR in which frequencies higher than those in LTE may be used, cell coverage is secured by forming a narrow beam-like transmission and reception range (beamforming) and changing directions of beams (beam sweeping).

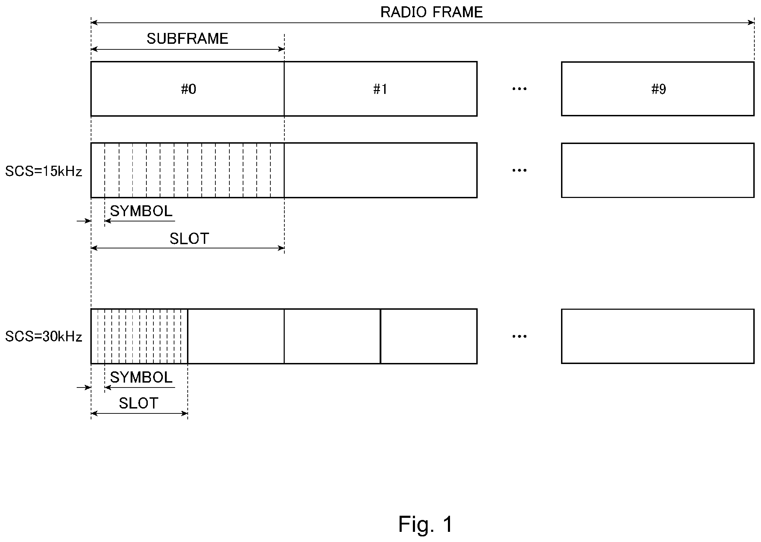

Decisions on a frame configuration in the NR system in 3GPP described in NPL 1 (Section 5) will be described with reference to Fig. 1. Fig. 1 is an explanatory diagram illustrating a configuration of radio frames used in an NR communication system. In Fig. 1, one radio frame has 10 ms. The radio frame is divided into 10 subframes having equal sizes. The frame configuration in NR supports one or a plurality of numerologies, that is, one or a plurality of subcarrier spacings (SCSs). In NR, one subframe includes 1 ms and one slot includes 14 symbols, regardless of the subcarrier spacing. The number of slots included in one subframe is one with the subcarrier spacing of 15 kHz, and the number of slots with other subcarrier spacings increases in proportion to the subcarrier spacing (see NPL 11 (3GPP TS 38.211)).

Decisions on a channel configuration in the NR system in 3GPP are described in NPL 2 (Section 5) and NPL 11.

A physical broadcast channel (PBCH) is a downlink transmission channel from a base station apparatus (which may be hereinafter simply referred to as a "base station") to a communication terminal apparatus (which may be hereinafter referred to as a "communication terminal" or a "terminal") such as a mobile terminal apparatus (which may be hereinafter simply referred to as a "mobile terminal"). The PBCH is transmitted together with a downlink synchronization signal.

The downlink synchronization signal in NR includes a primary synchronization signal (P-SS) and a secondary synchronization signal (S-SS). The synchronization signal is transmitted as a synchronization signal burst (which may be hereinafter referred to as an SS burst) from the base station with predetermined periodicity for predetermined duration. The SS burst includes a synchronization signal block (which may be hereinafter referred to as an SS block) of each beam of the base station.

The base station transmits, by changing the beams, the SS block of each beam within the duration of the SS burst. The SS block includes the P-SS, the S-SS, and the PBCH.

A physical downlink control channel (PDCCH) is a downlink transmission channel from the base station to the communication terminal. The PDCCH carries downlink control information (DCI). The DCI includes resource allocation information of a downlink shared channel (DL-SCH) being one of transport channels to be described later, resource allocation information of a paging channel (PCH) being one of transport channels to be described later, hybrid automatic repeat request (HARQ) information on the DL-SCH, and the like. The DCI may include an uplink scheduling grant. The DCI may include an acknowledgement (Ack)/negative acknowledgement (Nack) being a response signal for uplink transmission. For flexible switching of DL/UL in the slot, the DCI may include a slot format indication (SFI). The PDCCH or the DCI is also referred to as an L1/L2 control signal.

In NR, a time/frequency domain as candidates including the PDCCH is provided. The domain is referred to as a control resource set (CORESET). The communication terminal monitors the CORESET and acquires the PDCCH.

A physical downlink shared channel (PDSCH) is a downlink transmission channel from the base station to the communication terminal. To the PDSCH, a downlink shared channel (DL-SCH) being a transport channel and a PCH being a transport channel are mapped.

A physical uplink control channel (PUCCH) is an uplink transmission channel from the communication terminal to the base station. The PUCCH carries uplink control information (UCI). The UCI includes an Ack/Nack being a response signal for downlink transmission, channel state information (CSI), a scheduling request (SR), and the like. The CSI includes a rank indicator (RI), a precoding matrix indicator (PMI), and a channel quality indicator (CQI) report. The RI is rank information of a channel matrix in Multiple Input Multiple Output (MIMO). The PMI is information of a precoding weight matrix used in MIMO. The CQI is quality information indicating received data quality or communication path quality. The UCI may be carried on a PUSCH to be described later. The PUCCH or the UCI is also referred to as an L1/L2 control signal.

A physical uplink shared channel (PUSCH) is an uplink transmission channel from the communication terminal to the base station. To the PUSCH, an uplink shared channel (UL-SCH) being one of transport channels is mapped.

A physical random access channel (PRACH) is an uplink transmission channel from the communication terminal to the base station. The PRACH carries a random access preamble.

A downlink reference signal (RS) is known symbols in the NR communication system. The following four types of downlink reference signals are defined. They are a data demodulation reference signal (DM-RS) being a UE-specific reference signal, a phase tracking reference signal (PT-RS), a positioning reference signal (PRS), and a channel state information reference signal (CSI-RS). Measurement of a physical layer of the communication terminal includes reference signal received power (RSRP) measurement and reference signal received quality (RSRQ) measurement.

An uplink reference signal is also similarly known symbols in the NR communication system. The following three types of uplink reference signals are defined. They are a data demodulation reference signal (DM-RS), a phase tracking reference signal (PT-RS), and a sounding reference signal (SRS).

Transport channels described in NPL 2 (Section 5) will be described. A broadcast channel (BCH), among downlink transport channels, is broadcast to the entire coverage of the base station (cell). The BCH is mapped to the physical broadcast channel (PBCH).

HARQ retransmission control is applied to the downlink shared channel (DL-SCH). The DL-SCH can be broadcast to the entire coverage of the base station (cell). The DL-SCH supports dynamic or semi-static resource allocation. The semi-static resource allocation is also referred to as semi-persistent scheduling. The DL-SCH supports discontinuous reception (DRX) of the communication terminal in order to implement low power consumption of the communication terminal. The DL-SCH is mapped to the physical downlink shared channel (PDSCH).

The paging channel (PCH) supports DRX of the communication terminal in order to enable low power consumption of the communication terminal. The PCH is required to be broadcast to the entire coverage of the base station (cell). The PCH is mapped to physical resources that can be dynamically used for traffic, such as the physical downlink shared channel (PDSCH).

HARQ retransmission control is applied to the uplink shared channel (UL-SCH) among uplink transport channels. The UL-SCH supports dynamic or semi-static resource allocation. The semi-static resource allocation is also referred to as a configured grant. The UL-SCH is mapped to the physical uplink shared channel (PUSCH).

A random access channel (RACH) is limited to control information. The RACH has a risk of collision. The RACH is mapped to the physical random access channel (PRACH).

HARQ will be described. HARQ is a technology for enhancing communication quality of a transmission path, using a combination of an automatic repeat request (ARQ) and error correction (forward error correction). HARQ has an advantage in that, owing to retransmission, error correction effectively functions even for a transmission path with varying communication quality. Particularly, in retransmission, it is also possible to further enhance quality by combining reception results of first transmission and reception results of retransmission.

An example of a method of retransmission will be described. In a case in which a receiver fails to correctly decode received data, that is, a cyclic redundancy check (CRC) error occurs in the receiver (CRC = NG), a "Nack" is transmitted from the receiver to a transmitter. The transmitter that has received the "Nack" retransmits data. In a case in which the receiver successfully correctly decodes received data, that is, a CRC error does not occur in the receiver (CRC = OK), an "Ack" is transmitted from the receiver to the transmitter. The transmitter that has received the "Ack" transmits subsequent data.

Another example of a method of retransmission will be described. In a case in which a CRC error occurs in the receiver, a retransmission request is performed from the receiver to the transmitter. The retransmission request is performed using toggling of a new data indicator (NDI). The transmitter that has received the retransmission request retransmits data. In a case in which a CRC error does not occur in the receiver, the retransmission request is not performed. In a case in which the transmitter does not receive the retransmission request for a predetermined time, the transmitter considers that no CRC error has occurred in the receiver.

Logical channels described in NPL 1 (Section 6) will be described. A broadcast control channel (BCCH) is a downlink channel for broadcasting system control information. The BCCH being a logical channel is mapped to the broadcast channel (BCH) or the downlink shared channel (DL-SCH) being transport channels.

A paging control channel (PCCH) is a downlink channel for transmitting paging information and system information change. The PCCH being a logical channel is mapped to the paging channel (PCH) being a transport channel.

A common control channel (CCCH) is a channel for transmitting control information between the communication terminal and the base station. The CCCH is used in a case in which the communication terminal does not have RRC connection with the network. In the downlink direction, the CCCH is mapped to the downlink shared channel (DL-SCH) being a transport channel. In the uplink direction, the CCCH is mapped to the uplink shared channel (UL-SCH) being a transport channel.

A dedicated control channel (DCCH) is a channel for transmitting dedicated control information between the communication terminal and the network on a one-to-one basis. The DCCH is used in a case in which the communication terminal has RRC connection with the network. The DCCH is mapped to the uplink shared channel (UL-SCH) in the uplink, and is mapped to the downlink shared channel (DL-SCH) in the downlink.

A dedicated traffic channel (DTCH) is a channel for one-to-one communication to the communication terminal for transmission of user information. The DTCH is present in both of the uplink and the downlink. The DTCH is mapped to the uplink shared channel (UL-SCH) in the uplink, and is mapped to the downlink shared channel (DL-SCH) in the downlink.

Location tracking of the communication terminal is performed in a unit of an area consisting of one or more cells. Location tracking is performed to enable tracking the location of the communication terminal even in an idle state, and enable calling the communication terminal, that is, enable the communication terminal to receive a call. The area for location tracking of the communication terminal is referred to as a tracking area (TA).

NR supports calling the communication terminal in a range in a unit of an area smaller than the tracking area. The range is referred to as a RAN notification area (RNA). Paging of the communication terminal in an RRC_INACTIVE state to be described later is performed in the range.

In NR, carrier aggregation (CA) is studied, in which two or more component carriers (CCs) are aggregated to support wide frequency bandwidths (transmission bandwidths). CA is described in NPL 1.

In a case in which CA is configured, the UE being a communication terminal has a single RRC connection with the network (NW). In RRC connection, one serving cell provides Non-Access Stratum (NAS) mobility information and security input. The cell is referred to as a primary cell (PCell). A secondary cell (SCell) is configured to form a group of serving cells with the PCell, according to a UE capability. The group of serving cells consisting of one PCell and one or more SCells is configured for one UE.

3GPP has dual connectivity (abbreviated to DC) or the like in which the UE connects to two base stations and perform communication, in order to further increase communication capacity. DC is described in NPLs 1 and 22.

One of the base stations performing dual connectivity (DC) may be referred to as a "master base station (master node (MN))", and the other may be referred to as a "secondary base station (secondary node (SN))". The serving cells configured by the master base station may be collectively referred to as a master cell group (MCG), and the serving cells configured by the secondary base station may be collectively referred to as a secondary cell group (SCG). In DC, a primary cell in the MCG or the SCG is referred to as a special cell (SpCell or SPCell). The special cell in the MCG is referred to as a PCell, and the special cell in the SCG is referred to as a primary SCG cell (PSCell).

In NR, the base station configures a part of the carrier frequency band (the part may be hereinafter referred to as a bandwidth part (BWP)) for the UE in advance, and the UE performs transmission and reception to and from the base station in the BWP, to thereby reduce power consumption in the UE.

In 3GPP, support of services (which may be applications) using sidelink (Side Link, SL) communication (also referred to as PC5 communication) both in an Evolved Packet System (EPS) and a 5G core system to be described later is studied (see NPLs 1, 2, and 26 to 28). In SL communication, communication is performed between the terminals. Examples of the services using SL communication include a vehicle-to-everything (V2X) service, a proximity-based service, and the like. The SL communication proposes not only direct communication between the terminals but also communication between the UE and the NW via relay (see NPLs 26 and 28).

Physical channels used in the SL (see NPLs 2 and 11) will be described. A physical sidelink broadcast channel (PSBCH) carries information on a system and synchronization, and is transmitted from the UE.

A physical sidelink control channel (PSCCH) carries control information from the UE for sidelink communication and V2X sidelink communication.

A physical sidelink shared channel (PSSCH) carries data from the UE for sidelink communication and V2X sidelink communication.

A physical sidelink feedback channel (PSFCH) carries sidelink HARQ feedback from the UE that has received PSSCH transmission to the UE that has transmitted the PSSCH.

Transport channels used in the SL (see NPL 1) will be described. A sidelink broadcast channel (SL-BCH) has a predetermined transport format, and is mapped to the PSBCH being a physical channel.

A sidelink shared channel (SL-SCH) supports broadcast transmission. The SL-SCH supports both of UE autonomous resource selection and resource allocation scheduled by the base station. UE autonomous resource selection has a risk of collision, and in a case in which dedicated resources are allocated to the UE by the base station, there is no collision. The SL-SCH supports dynamic link adaptation by changing transmission power, modulation, and coding. The SL-SCH is mapped to the PSSCH being a physical channel.

Logical channels used in the SL (see NPL 2) will be described. A sidelink broadcast control channel (SBCCH) is a sidelink channel for broadcasting sidelink system information from one UE to another UE. The SBCCH is mapped to the SL-BCH being a transport channel.

A sidelink traffic channel (STCH) is a one-to-many sidelink traffic channel for transmitting user information from one UE to another UE. The STCH is used only by the UE having a sidelink communication capability and the UE having a V2X sidelink communication capability. One-to-one communication between the UEs having two sidelink communication capabilities is also implemented on the STCH. The STCH is mapped to the SL-SCH being a transport channel.

A sidelink control channel (SCCH) is a sidelink control channel for transmitting control information from one UE to another UE. The SCCH is mapped to the SL-SCH being a transport channel.

In LTE, only broadcast is supported in the SL communication. In NR, support of unicast and groupcast in addition to broadcast in the SL communication is studied (see NPL 27 (3GPP TS 23.287)).

In SL unicast communication and groupcast communication, HARQ feedback (Ack/Nack), a CSI report, and the like are supported.

In 3GPP, an integrated access and backhaul (IAB) is studied, in which both of an access link being a link between the UE and the base station and a backhaul link being a link between the base stations are performed wirelessly (see NPLs 2, 20, and 29).

Some new technologies are proposed for the mobile communication system. For example, in order to enhance communication capacity and reliability, a technology in which one terminal is simultaneously connected to a plurality of NWs to enhance communication capacity and reliability is proposed (see NPLs 30 and 31).

### Citation List

### Non Patent Literature

[NPL 1] 3GPP TS 36.300 V17.5.0
[NPL 2] 3GPP TS 38.300 V17.6.0
[NPL 3] "Scenarios, requirements and KPIs for 5G mobile and wireless system", ICT-317669-METIS/D1.1
[NPL 4] 3GPP TR 23.799 V14.0.0
[NPL 5] 3GPP TR 38.801 V14.0.0
[NPL 6] 3GPP TR 38.802 V14.2.0
[NPL 7] 3GPP TR 38.804 V14.0.0
[NPL 8] 3GPP TR 38.912 V16.0.0
[NPL 9] 3GPP RP-172115
[NPL 10] 3GPP TS 23.501 V18.3.0
[NPL 11] 3GPP TS 38.211 V18.0.0
[NPL 12] 3GPP TS 38.212 V18.0.0
[NPL 13] 3GPP TS 38.213 V18.0.0
[NPL 14] 3GPP TS 38.214 V18.0.0
[NPL 15] 3GPP TS 38.321 V17.6.0
[NPL 16] 3GPP TS 38.322 V17.3.0
[NPL 17] 3GPP TS 38.323 V17.5.0
[NPL 18] 3GPP TS 37.324 V17.0.0
[NPL 19] 3GPP TS 38.331 V17.6.0
[NPL 20] 3GPP TS 38.401 V17.6.0
[NPL 21] 3GPP TS 38.413 V17.6.0
[NPL 22] 3GPP TS 37.340 V17.6.0
[NPL 23] 3GPP TS 38.423 V17.6.0
[NPL 24] 3GPP TS 38.305 V17.6.0
[NPL 25] 3GPP TS 23.273 V18.3.0
[NPL 26] 3GPP TR 23.703 V12.0.0
[NPL 27] 3GPP TS 23.287 V18.1.0
[NPL 28] 3GPP TS 23.303 V17.1.0
[NPL 29] 3GPP TS 38.340 V17.5.0
[NPL 30] 3GPP SWS-230049
[NPL 31] 3GPP TS 23.502 V18.3.0
[NPL 32] 3GPP TS 23.503 V18.3.0
[NPL 33] 3GPP TR 32.851 V12.2.0
[NPL 34] 3GPP TS 28.537 V17.3.0

### SUMMARY

### Technical Problem

In the plurality of NWs to which the UE is simultaneously connected, the NW as a path of traffic between the UE and a data network (DN) may be switched. However, a problem arises in that there is a fear that switching of the NW is performed before data from the NW prior to the switching fully arrives at the UE, thus causing a loss of the data.

The present disclosure is made in view of the problem described above, and has one object to enable enhancement of reliability of data transmission and reception when network switching occurs in a communication system having a configuration in which a UE is capable of being simultaneously connected to a plurality of networks.

### Solution to Problem

A communication system according to the present disclosure is a communication system supporting a fifth generation radio access system. The communication system includes an anchor network being a network having a user plane function that directly connects to a data network as a data transmission and reception target of a communication terminal, and a non-anchor network being a network that connects to the data network via the anchor network. A plurality of protocol stacks for the communication terminal and the data network to communicate with each other are provided. The communication terminal is configured to, when the communication terminal switches the network to be connected to, by using the plurality of protocol stacks, transition to a state of performing communication with the data network by connecting to both of the anchor network and the non-anchor network, and then terminate communication with the data network via a switching source network.

### Advantageous Effects of Invention

According to the present disclosure, it is possible to implement enhancement of reliability of data transmission and reception when network switching occurs in a communication system having a configuration in which a UE is capable of being simultaneously connected to a plurality of networks.

The objects, features, aspects and advantages of the present disclosure will become more apparent from the following detailed description and the accompanying drawings.

### BRIEF DESCRIPTION OF THE DRAWINGS

Fig. 1 is an explanatory diagram illustrating a configuration of radio frames used in an NR communication system;
Fig. 2 is a block diagram illustrating an overall configuration of an NR communication system 210 discussed in 3GPP;
Fig. 3 is a configuration diagram of DC performed by base stations to connect to an NG core;
Fig. 4 is a block diagram illustrating a configuration of a mobile terminal 202 illustrated in Fig. 2;
Fig. 5 is a block diagram illustrating a configuration of a base station 213 illustrated in Fig. 2;
Fig. 6 is a block diagram illustrating a configuration of a 5GC unit;
Fig. 7 is a flowchart illustrating an outline from cell search to idle operation performed by a communication terminal (UE) in an NR communication system;
Fig. 8 is a diagram illustrating an example of a configuration of a cell in an NR system;
Fig. 9 is a connection configuration diagram illustrating an example of a connection configuration of terminals in SL communication;
Fig. 10 is a connection configuration diagram illustrating an example of a connection configuration of base stations supporting an integrated access and backhaul;
Fig. 11 is a configuration diagram illustrating an example in which the UE is connected to a plurality of NWs according to a first embodiment;
Fig. 12 is a diagram illustrating an example of protocol stacks between the UE and an anchor UPF according to the first embodiment;
Fig. 13 is a diagram illustrating another example of protocol stacks between the UE and the anchor UPF according to the first embodiment;
Fig. 14 is a diagram illustrating another example of protocol stacks between the UE and the anchor UPF according to the first embodiment;
Fig. 15 is a diagram illustrating another example of protocol stacks between the UE and the anchor UPF according to the first embodiment;
Fig. 16 is a diagram of a first half of a sequence illustrating an example of NW switching operation in which protocols of both NWs are maintained according to the first embodiment;
Fig. 17 is a diagram of a second half of the sequence illustrating the example of the NW switching operation in which the protocols of both the NWs are maintained according to the first embodiment;
Fig. 18 is a sequence diagram illustrating an example of Procedure 1100 of Fig. 16;
Fig. 19 is a sequence diagram illustrating an example of Procedure 1111 of Fig. 16;
Fig. 20 is a sequence diagram illustrating an example of Procedure 1120 of Fig. 16;
Fig. 21 is a sequence diagram illustrating an example of Procedure 1130 of Fig. 16; and
Fig. 22 is a sequence diagram illustrating an example of Procedure 1255 of Fig. 17.

### DETAILED DESCRIPTION

### First Embodiment

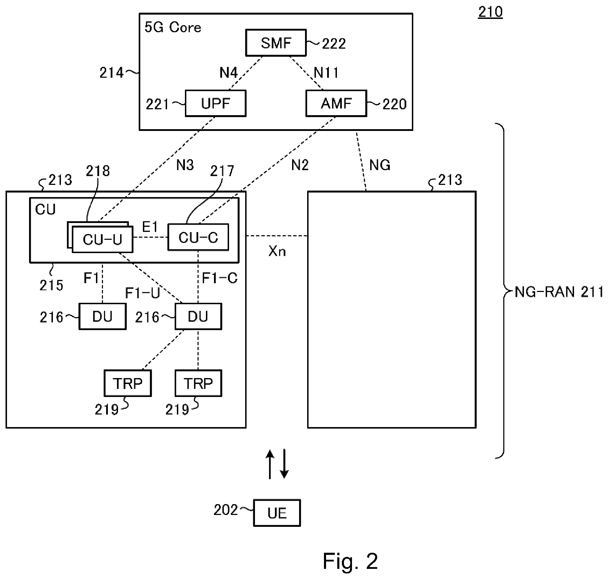

Fig. 2 is a block diagram illustrating an overall configuration of an NR communication system 210 discussed in 3GPP. Fig. 2 will be described. A radio access network is referred to as a next generation radio access network (NG-RAN) 211. A mobile terminal apparatus (hereinafter referred to as a "mobile terminal (user equipment (UE))") 202 being a communication terminal apparatus is capable of radio communication with a base station apparatus (hereinafter referred to as an "NR base station (NG-RAN Node B (gNB))") 213, and transmits and receives signals in radio communication. The NG-RAN 211 includes one or a plurality of NR base stations 213.

Here, the "communication terminal apparatus" includes not only the mobile terminal apparatus such as a mobile cellular phone terminal apparatus, but also includes an immobile device such as a sensor. In the following description, the "communication terminal apparatus" may be simply referred to as a "communication terminal".

A protocol of Access Stratum (AS) is terminated between the UE 202 and the NG-RAN 211. As the protocol of AS, for example, Radio Resource Control (RRC), Service Data Adaptation Protocol (SDAP), Packet Data Convergence Protocol (PDCP), Radio Link Control (RLC), Medium Access Control (MAC), and Physical layer (PHY) are used. The RRC is used in a control plane (which may be hereinafter also referred to as a C plane, a C-Plane, or a CP), the SDAP is used in a user plane (which may be hereinafter also referred to as a U plane, a U-Plane, or a UP), and the PDCP, the MAC, the RLC, and the PHY are used in both of the C plane and the U plane.

The control protocol Radio Resource Control (RRC) between the UE 202 and the NR base station 213 performs broadcast, paging, RRC connection management, and the like. States between the NR base station 213 and the UE 202 in RRC include RRC_IDLE, RRC_CONNECTED, and RRC_INACTIVE.

In RRC_IDLE, public land mobile network (PLMN) selection, system information (SI) broadcast, paging, cell re-selection, mobility, and the like are performed. In RRC_CONNECTED, the mobile terminal has RRC connection, and can transmit and receive data to and from a network. In RRC_CONNECTED, handover (HO), neighbor cell measurement, and the like are performed. In RRC_INACTIVE, connection between a 5G core unit 214 and the NR base station 213 is maintained, and system information (SI) broadcast, paging, cell re-selection, mobility, and the like are performed.

The gNB 213 is connected to the 5G core unit (which may be hereinafter referred to as a "5GC unit") 214 including an Access and Mobility Management Function (AMF), a Session Management Function (SMF), a User Plane Function (UPF), and the like via an NG interface. Control information and/or user data is communicated between the gNB 213 and the 5GC unit 214. The NG interface is a general term for an N2 interface between the gNB 213 and an AMF 220, an N3 interface between the gNB 213 and a UPF 221, an N11 interface between the AMF 220 and an SMF 222, and an N4 interface between the UPF 221 and the SMF 222. A plurality of 5GC units 214 may be connected to one gNB 213. The gNBs 213 are connected via an Xn interface, and control information and/or user data is communicated between the gNBs 213.

The 5GC unit 214 is an upper apparatus, or specifically an upper node, and performs control of connection between the NR base station 213 and the mobile terminal (UE) 202, distribution of paging signals to one or a plurality of NR base stations (gNBs) 213 and/or LTE base stations (E-UTRAN Node Bs (eNBs)), and the like. The 5GC unit 214 performs mobility control of an idle state. In a case in which the mobile terminal 202 is in an idle state, an inactive state, and an active state, the 5GC unit 214 manages a tracking area list. The 5GC unit 214 transmits a paging message to a cell belonging to a tracking area in which the mobile terminal 202 is registered, and thereby starts a paging protocol.

The gNB 213 may configure one or a plurality of cells. In a case in which one gNB 213 configures a plurality of cells, each cell is configured to be capable of communicating with the UE 202.

The gNB 213 may be divided into a central unit (which may be hereinafter referred to as a CU) 215 and a distributed unit (which may be hereinafter referred to as a DU) 216. One CU 215 is configured in the gNB 213. One or a plurality of DUs 216 are configured in the gNB 213. One DU 216 configures one or a plurality of cells. The CU 215 is connected to the DU 216 via an F1 interface, and control information and/or user data is communicated between the CU 215 and the DU 216. The F1 interface includes an F1-C interface and an F1-U interface. The CU 215 has a function of each protocol of the RRC, the SDAP, and the PDCP, and the DU 216 has a function of each protocol of the RLC, the MAC, and the PHY. One or a plurality of transmission reception points (TRPs) 219 may be connected to the DU 216. The TRP 219 transmits and receives radio signals to and from the UE.

The CU 215 may be divided into a C-plane CU (CU-C) 217 and a U-plane CU (CU-U) 218. One CU-C 217 is configured in the CU 215. One or a plurality of CU-Us 218 are configured in the CU 215. The CU-C 217 is connected to the CU-U 218 via an E1 interface, and control information is communicated between the CU-C 217 and the CU-U 218. The CU-C 217 is connected to the DU 216 via an F1-C interface, and control information is communicated between the CU-C 217 and the DU 216. The CU-U 218 is connected to the DU 216 via an F1-U interface, and user data is communicated between the CU-U 218 and the DU 216.

In the 5G communication system, a Unified Data Management (UDM) function and a Policy Control Function (PCF) described in NPL 10 (3GPP TS 23.501) may be included. The UDM and/or the PCF may be included in the 5GC unit 214 of Fig. 2.

In the 5G communication system, a Location Management Function (LMF) described in NPL 24 (3GPP TS 38.305) may be provided. As disclosed in NPL 25 (3GPP TS 23.273), the LMF may be connected to the base station via the AMF.

In the 5G communication system, a Non-3GPP Interworking Function (N3IWF) described in NPL 10 (3GPP TS 23.501) may be included. The N3IWF may terminate an access network (AN) between the N3IWF and the UE in non-3GPP access with the UE.

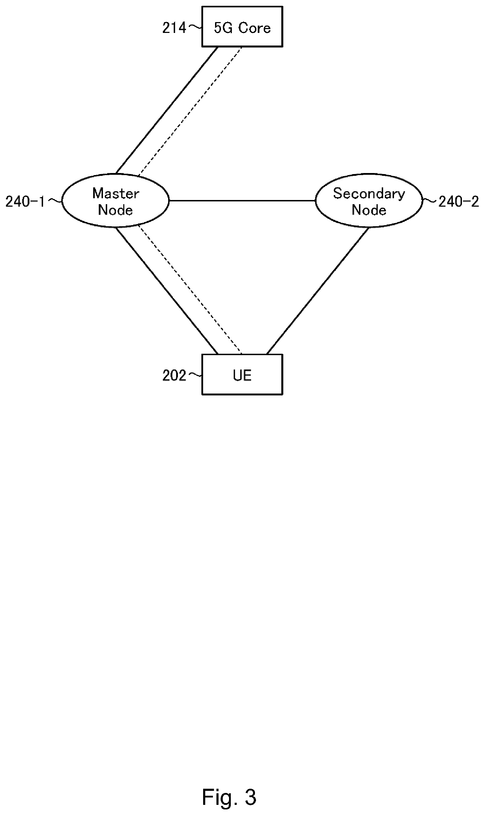

Fig. 3 is a diagram illustrating a configuration of dual connectivity (DC) to connect to an NG core. In Fig. 3, the solid line indicates connection of the U-Plane, and the broken line indicates connection of the C-Plane. In Fig. 3, a master base station 240-1 may be a gNB or an eNB. A secondary base station 240-2 may be a gNB or an eNB. For example, in Fig. 3, a DC configuration in which the master base station 240-1 is a gNB and the secondary base station 240-2 is an eNB may be referred to as NG-EN-DC. Although Fig. 3 illustrates an example in which U-Plane connection between the 5GC unit 214 and the secondary base station 240-2 is performed via the master base station 240-1, the U-Plane connection may be directly performed between the 5GC unit 214 and the secondary base station 240-2. In Fig. 3, in place of the 5GC unit 214, an Evolved Packet Core (EPC), which is a core network connected to the LTE system or the LTE-A system, may be connected to the master base station 240-1. U-Plane connection between the EPC and the secondary base station 240-2 may be directly performed.

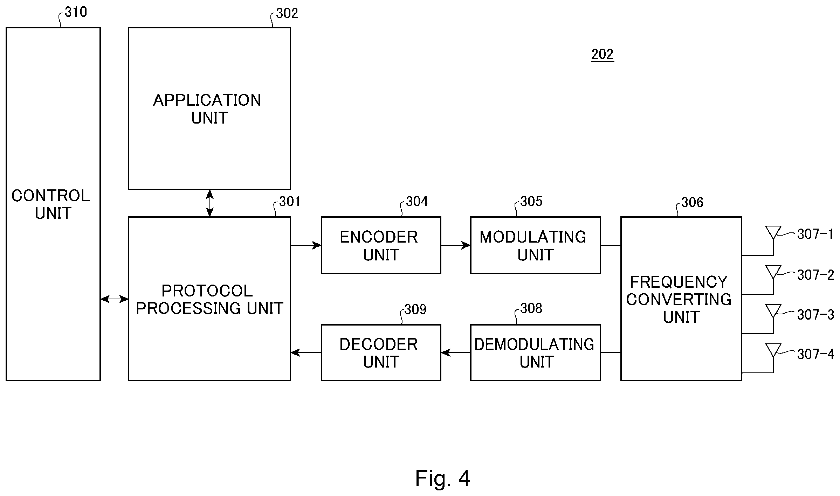

Fig. 4 is a block diagram illustrating a configuration of the mobile terminal 202 illustrated in Fig. 2. Transmission processing of the mobile terminal 202 illustrated in Fig. 4 will be described. First, control data from a control unit 310 and user data from an application unit 302 are transmitted to a protocol processing unit 301. The control data and the user data may be buffered. The buffers of the control data and the user data may be provided in the control unit 310, may be provided in the application unit 302, or may be provided in the protocol processing unit 301. The protocol processing unit 301 performs protocol processing of the SDAP, the PDCP, the RLC, the MAC, and the like, for example, operation such as determination of a transmission destination base station in DC or the like and provision of a header in each protocol. The data subjected to the protocol processing is delivered to an encoder unit 304, and is subjected to encoding processing such as error correction. There may be data that is directly output from the protocol processing unit 301 to a modulating unit 305 without being subjected to the encoding processing. The data subjected to the encoding processing in the encoder unit 304 is subjected to modulation processing in the modulating unit 305. In the modulating unit 305, MIMO precoding may be performed. The modulated data is converted into a baseband signal, and is then output to a frequency converting unit 306 to be converted into a radio transmission frequency. Subsequently, transmission signals are transmitted from antennas 307-1 to 307-4 to the base station 213. Although Fig. 4 illustrates an example of a case in which the number of antennas is four, the number of antennas is not limited to four.

Reception processing of the mobile terminal 202 is performed as follows. A radio signal from the base station 213 is received by the antennas 307-1 to 307-4. The received signal is converted from a radio reception frequency into a baseband signal in the frequency converting unit 306, and is subjected to demodulation processing in a demodulating unit 308. In the demodulating unit 308, weight calculation and multiplication processing may be performed. The demodulated data is delivered to a decoder unit 309, and is subjected to decoding processing such as error correction. The decoded data is delivered to the protocol processing unit 301, and is subjected to protocol processing of the MAC, the RLC, the PDCP, the SDAP, and the like, for example, operation such as removal of a header in each protocol. Of the data subjected to the protocol processing, the control data is delivered to the control unit 310 and the user data is delivered to the application unit 302.

The series of processing of the mobile terminal 202 is controlled by the control unit 310. Thus, the control unit 310 is also connected to each of the units 302 and 304 to 309, of which illustration is omitted in Fig. 4.

Each unit of the mobile terminal 202, such as the control unit 310, the protocol processing unit 301, the encoder unit 304, and the decoder unit 309, is implemented by processing circuitry including a processor and a memory, for example. For example, the control unit 310 is implemented by the processor executing a program describing the series of processing of the mobile terminal 202. The program describing the series of processing of the mobile terminal 202 is stored in the memory. Examples of the memory include non-volatile or volatile semiconductor memories, such as a random access memory (RAM), a read only memory (ROM), and a flash memory. Each unit of the mobile terminal 202, such as the control unit 310, the protocol processing unit 301, the encoder unit 304, and the decoder unit 309, may be implemented by dedicated processing circuitry such as a field programmable gate array (FPGA), an application specific integrated circuit (ASIC), and a digital signal processor (DSP). In Fig. 4, the number of antennas used by the mobile terminal 202 for transmission and the number of antennas used thereby for reception may be the same or different.

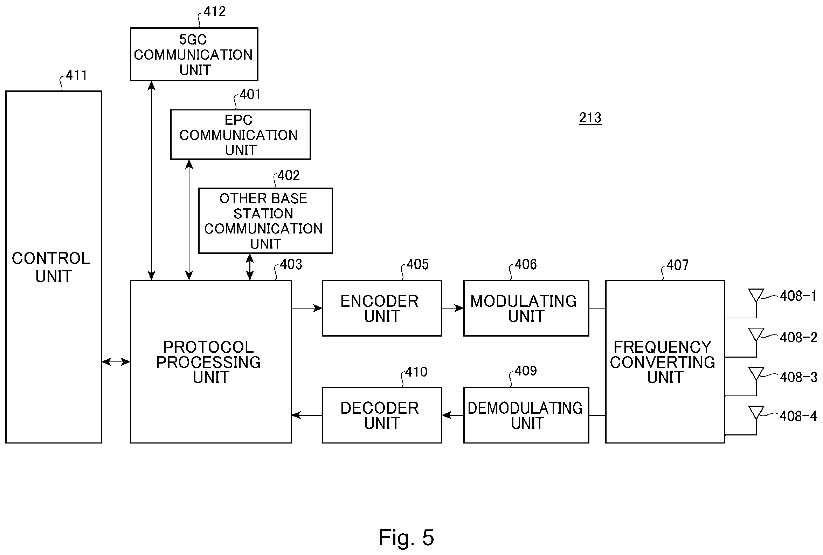

Fig. 5 is a block diagram illustrating a configuration of the base station 213 illustrated in Fig. 2. Transmission processing of the base station 213 illustrated in Fig. 5 will be described. An EPC communication unit 401 transmits and receives data between the base station 213 and the EPC. A 5GC communication unit 412 transmits and receives data between the base station 213 and the 5GC (such as the 5GC unit 214). Another base station communication unit 402 transmits and receives data to and from another base station. Each of the EPC communication unit 401, the 5GC communication unit 412, and such another base station communication unit 402 exchanges information with a protocol processing unit 403. Control data from a control unit 411 and user data and control data from the EPC communication unit 401, the 5GC communication unit 412, and such another base station communication unit 402 are transmitted to the protocol processing unit 403. The control data and the user data may be buffered. The buffers of the control data and the user data may be provided in the control unit 411, may be provided in the EPC communication unit 401, may be provided in the 5GC communication unit 412, or may be provided in such another base station communication unit 402.

The protocol processing unit 403 performs protocol processing of the SDAP, the PDCP, the RLC, the MAC, and the like, for example, operation such as routing of transmission data in DC or the like and provision of a header in each protocol. The data subjected to the protocol processing is delivered to an encoder unit 405, and is subjected to encoding processing such as error correction. There may be data that is directly output from the protocol processing unit 403 to a modulating unit 406 without being subjected to the encoding processing. The data may be transmitted from the protocol processing unit 403 to such another base station communication unit 402. For example, in DC, the data transmitted from the 5GC communication unit 412 or the EPC communication unit 401 may be transmitted to another base station, such as the secondary base station, via such another base station communication unit 402. The encoded data is subjected to modulation processing in the modulating unit 406. In the modulating unit 406, MIMO precoding may be performed. The modulated data is converted into a baseband signal, and is then output to the frequency converting unit 407 to be converted into a radio transmission frequency. Subsequently, transmission signals are transmitted from antennas 408-1 to 408-4 to one or a plurality of mobile terminals 202. Although Fig. 5 illustrates an example of a case in which the number of antennas is four, the number of antennas is not limited to four.

Reception processing of the base station 213 is performed as follows. A radio signal from one or a plurality of mobile terminals 202 is received by the antennas 408-1 to 408-4. The received signal is converted from a radio reception frequency into a baseband signal in the frequency converting unit 407, and is subjected to demodulation processing in a demodulating unit 409. The demodulated data is delivered to a decoder unit 410, and is subjected to decoding processing such as error correction. The decoded data is delivered to the protocol processing unit 403, and is subjected to protocol processing of the MAC, the RLC, the PDCP, the SDAP, and the like, for example, operation such as removal of a header in each protocol. Of the data subjected to the protocol processing, the control data is delivered to the control unit 411, the 5GC communication unit 412, the EPC communication unit 401, or such another base station communication unit 402, and the user data is delivered to the 5GC communication unit 412, the EPC communication unit 401, or such another base station communication unit 402. The data transmitted from such another base station communication unit 402 may be transmitted to the 5GC communication unit 412 or the EPC communication unit 401. The data may be uplink data transmitted to the 5GC communication unit 412 or the EPC communication unit 401 via another base station in DC, for example.

The series of processing of the base station 213 is controlled by the control unit 411. Thus, the control unit 411 is also connected to each of the units 401, 402, 405 to 410, and 412, of which illustration is omitted in Fig. 5.

Each unit of the base station 213, such as the control unit 411, the protocol processing unit 403, the 5GC communication unit 412, the EPC communication unit 401, such another base station communication unit 402, the encoder unit 405, and the decoder unit 410, is implemented by processing circuitry including a processor and a memory or dedicated processing circuitry such as an FPGA, an ASIC, and a DSP, as in the case of the mobile terminal 202 described above. In Fig. 5, the number of antennas used by the base station 213 for transmission and the number of antennas used thereby for reception may be the same or different.

As an example of a configuration of the CU 215 illustrated in Fig. 2, a configuration provided with a DU communication unit may be used, except the encoder unit 405, the modulating unit 406, the frequency converting unit 407, the antennas 408-1 to 408-4, the demodulating unit 409, and the decoder unit 410 illustrated in Fig. 5. The DU communication unit is connected to the protocol processing unit 403. The protocol processing unit 403 in the CU 215 performs protocol processing of the PDCP, the SDAP, and the like.

As an example of a configuration of the DU 216 illustrated in Fig. 2, a configuration provided with a CU communication unit may be used, except the EPC communication unit 401, such another base station communication unit 402, and the 5GC communication unit 412 illustrated in Fig. 5. The CU communication unit is connected to the protocol processing unit 403. The protocol processing unit 403 in the DU 216 performs protocol processing of the PHY, the MAC, the RLC, and the like.

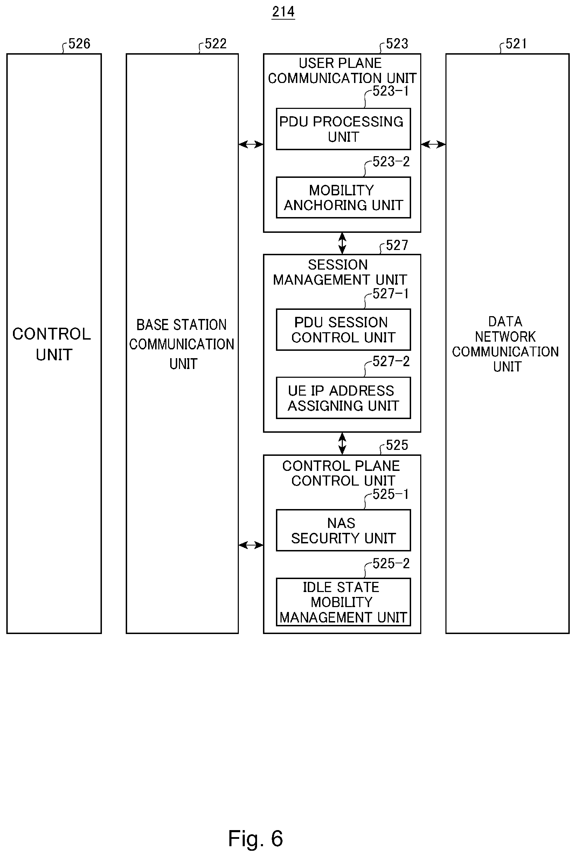

Fig. 6 is a block diagram illustrating a configuration of the 5GC unit. Fig. 6 illustrates a configuration of the 5GC unit 214 illustrated in Fig. 2 described above. Fig. 6 illustrates a case in which a configuration of the AMF, a configuration of the SMF, and a configuration of the UPF are included in the 5GC unit 214 illustrated in Fig. 2. In the example illustrated in Fig. 6, the AMF may have a function of a control plane control unit 525, the SMF may have a function of a session management unit 527, and the UPF may have a function of a user plane communication unit 523 and a data network communication unit 521. The data network communication unit 521 transmits and receives data between the 5GC unit 214 and a data network. The base station communication unit 522 transmits and receives data between the 5GC unit 214 and the base station 213 via an NG interface. User data transmitted from the data network is delivered from the data network communication unit 521 to the base station communication unit 522 via the user plane communication unit 523, and is transmitted to one or a plurality of base stations 213. User data transmitted from the base station 213 is delivered from the base station communication unit 522 to the data network communication unit 521 via the user plane communication unit 523, and is transmitted to the data network.

Control data transmitted from the base station 213 is delivered from the base station communication unit 522 to the control plane control unit 525. The control plane control unit 525 may deliver the control data to the session management unit 527. The control data may be transmitted from the data network. The control data transmitted from the data network may be transmitted from the data network communication unit 521 to the session management unit 527 via the user plane communication unit 523. The session management unit 527 may transmit the control data to the control plane control unit 525.

The user plane communication unit 523 includes a PDU processing unit 523-1, a mobility anchoring unit 523-2, and the like, and performs general processing on the user plane (which may be hereinafter also referred to as a U-Plane). The PDU processing unit 523-1 performs processing of data packets, for example, transmission and reception of packets to and from the data network communication unit 521 and transmission and reception of packets to and from the base station communication unit 522. The mobility anchoring unit 523-2 anchors a data path at the time of mobility of the UE.

The session management unit 527 performs management of a PDU session provided between the UE and the UPF and the like. The session management unit 527 includes a PDU session control unit 527-1, a UE IP address assigning unit 527-2, and the like. The PDU session control unit 527-1 performs management of a PDU session between the mobile terminal 202 and the 5GC unit 214. The UE IP address assigning unit 527-2 performs assignment of an IP address to the mobile terminal 202 and the like.

The control plane control unit 525 includes a NAS security unit 525-1, an idle state mobility management unit 525-2, and the like, and performs general processing on the control plane (which may be hereinafter also referred to as a C-Plane). The NAS security unit 525-1 performs security of a Non-Access Stratum (NAS) message and the like. The idle state mobility management unit 525-2 performs mobility management of the idle state (which may also be simply referred to as an "RRC_IDLE state" or "idle"), generation and control of a paging signal in the idle state, addition, deletion, update, search, and tracking area list management of a tracking area of one or a plurality of served mobile terminals 202, and the like.

The series of processing of the 5GC unit 214 is controlled by a control unit 526. Thus, the control unit 526 is connected to each of the units 521 to 523, 525, and 527, of which illustration is omitted in Fig. 6. Each unit of the 5GC unit 214 is implemented by processing circuitry including a processor and a memory or dedicated processing circuitry such as an FPGA, an ASIC, and a DSP, for example, as in the case of the control unit 310 of the mobile terminal 202 described above.

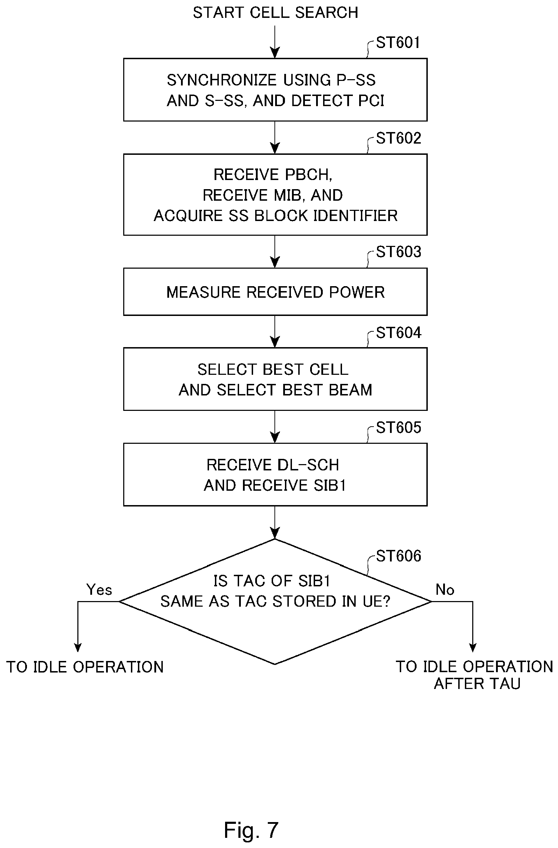

Next, an example of a cell search method in the communication system will be described. Fig. 7 is a flowchart illustrating an outline from cell search to idle operation performed by the communication terminal (UE) in the NR communication system. After the communication terminal starts cell search, in Step ST601, the communication terminal establishes synchronization of a slot timing and a frame timing, using a primary synchronization signal (P-SS) and a secondary synchronization signal (S-SS) transmitted from a neighbor base station.

The P-SS and the S-SS are collectively referred to as a synchronization signal (SS). The synchronization signal (SS) is assigned a synchronization code that corresponds to a physical cell identifier (PCI) assigned to each cell on a one-to-one basis. It is studied that the number of PCIs is 1008. The communication terminal establishes synchronization using the 1008 PCIs, and detects (identifies) the PCI(s) of synchronized cell(s).

Next, in Step ST602, the communication terminal receives a PBCH of the synchronized cell. A master information block (MIB) including cell configuration information is mapped to a BCCH on the PBCH. Thus, by receiving the PBCH and obtaining the BCCH, the MIB can be obtained. Examples of information of the MIB include a system frame number (SFN), scheduling information of a system information block (SIB) 1, subcarrier spacing for the SIB1 or the like, information of a DM-RS position, and the like.

The communication terminal acquires an SS block identifier on the PBCH. A part of a bit string of the SS block identifier is included in the MIB. The rest of the bit string is included in an identifier used to generate a DM-RS sequence accompanying the PBCH. The communication terminal acquires the SS block identifier, using the MIB included in the PBCH and the DM-RS sequence accompanying the PBCH.

Next, in Step ST603, the communication terminal measures received power of an SS block.

Next, in Step ST604, the communication terminal selects a cell having the best received quality, for example, a cell having the highest received power, that is, the best cell, out of the one or more cells detected up to Step ST603. The communication terminal selects a beam having the best received quality, for example, a beam having the highest received power of the SS block, that is, the best beam. In selection of the best beam, for example, received power of the SS block of each SS block identifier is used.

Next, in Step ST605, the communication terminal receives a DL-SCH based on the scheduling information of the SIB1 included in the MIB, and obtains the SIB1 in the broadcast information BCCH. The SIB1 includes information on access to the cell, cell configuration information, and scheduling information of another SIB (SIBk: k is an integer satisfying k ≥ 2). The SIB1 includes a tracking area code (TAC).

Next, in Step ST606, the communication terminal compares the TAC of the SIB1 received in Step ST605 and a TAC part of a tracking area identity (TAI) in a tracking area list already stored in the communication terminal. The tracking area list is also referred to as a TAI list. The TAI is identification information for identifying the tracking area, and includes a mobile country code (MCC), a mobile network code (MNC), and a tracking area code (TAC). The MCC is a country code. The MNC is a network code. The TAC is a code number of a tracking area.

As a result of the comparison in Step ST606, if the TAC received in Step ST605 is the same as the TAC included in the tracking area list, the communication terminal starts idle operation in the cell. As a result of the comparison, if the TAC received in Step ST605 is not included in the tracking area list, the communication terminal requests, via the cell, the core network (EPC) including an MME and the like to change the tracking area in order to perform tracking area update (TAU).

An apparatus configuring the core network (which may be hereinafter referred to as a "core network apparatus") updates the tracking area list, based on an identification number (a UE-ID or the like) of the communication terminal transmitted from the communication terminal together with a TAU request signal. The core network apparatus transmits the updated tracking area list to the communication terminal. The communication terminal rewrites (updates) a TAC list stored in the communication terminal, based on the received tracking area list. Subsequently, the communication terminal starts idle operation in the cell.

Next, an example of a random access method in the communication system will be described. In random access, 4-step random access and 2-step random access are used. In each of the 4-step random access and the 2-step random access, there are contention-based random access, that is, random access which may cause contention of timings with other mobile terminals, and contention-free random access.

An example of a contention-based 4-step random access method will be described. As a first step, the mobile terminal transmits a random access preamble to the base station. The random access preamble may be selected by the mobile terminal from a predetermined range, or may be individually assigned to the mobile terminal and notified from the base station.

As a second step, the base station transmits a random access response to the mobile terminal. The random access response includes uplink scheduling information to be used in a third step, a terminal identifier to be used in uplink transmission in the third step, and the like.

As the third step, the mobile terminal performs uplink transmission to the base station. The mobile terminal uses the information acquired in the second step in the uplink transmission. As a fourth step, the base station notifies the mobile terminal as to whether contention resolution is achieved. The mobile terminal notified of "without contention" ends random access processing. The mobile terminal notified of "with contention" resumes processing from the first step.

A contention-free 4-step random access method is different from the contention-based 4-step random access method in the following. In other words, prior to the first step, the base station assigns a random access preamble and uplink scheduling to the mobile terminal in advance. A notification as to whether contention resolution is achieved in the fourth step is unnecessary.

An example of a contention-based 2-step random access method will be described. As a first step, the mobile terminal performs transmission of a random access preamble and uplink transmission to the base station. As a second step, the base station notifies the mobile terminal as to whether there is contention. The mobile terminal notified of "without contention" ends random access processing. The mobile terminal notified of "with contention" resumes processing from the first step.

A contention-free 2-step random access method is different from the contention-based 2-step random access method in the following. In other words, prior to the first step, the base station assigns a random access preamble and uplink scheduling to the mobile terminal in advance. As a second step, the base station transmits a random access response to the mobile terminal.

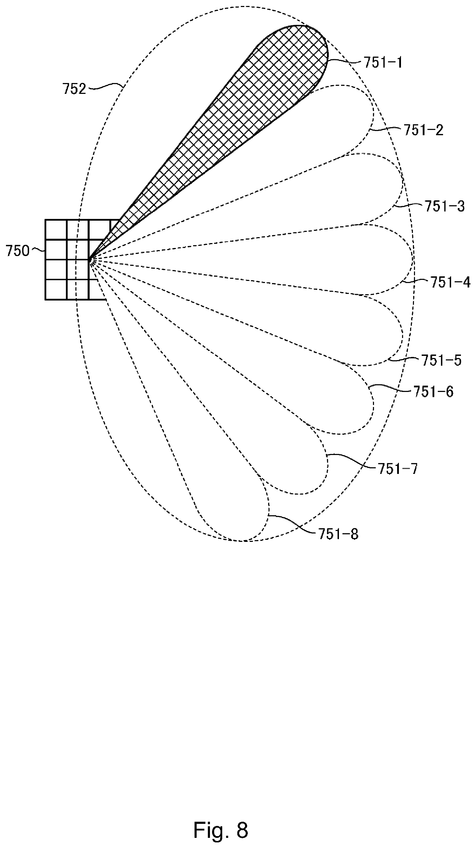

Fig. 8 illustrates an example of a configuration of a cell in NR. In a cell in NR, a narrow beam is formed and is transmitted with its direction being changed. In the example illustrated in Fig. 8, a base station 750 performs transmission and reception to and from the mobile terminal, using a beam 751-1 at a certain time. At another time, the base station 750 performs transmission and reception to and from the mobile terminal, using a beam 751-2. Subsequently, similarly, the base station 750 performs transmission and reception to and from the mobile terminal, using one or a plurality of beams 751-3 to 751-8. In this manner, the base station 750 configures a cell 752 having a wide range.

Although Fig. 8 illustrates an example in which the number of beams used by the base station 750 is eight, the number of beams may be different from eight. In the example illustrated in Fig. 8, although the number of beams simultaneously used by the base station 750 is one, the number of beams may be more than one.

A concept of quasi-colocation (QCL) is used in identification of a beam (see NPL 14 (3GPP TS 38.214)). In other words, identification is performed using information indicating as which beam of a reference signal (for example, an SS block, a CSI-RS) the beam can be considered to be the same. The information may include types of information regarding aspects in which the beam can be considered to be the same beam, for example, information on a Doppler shift, a Doppler shift spread, an average delay, an average delay spread, and a spatial Rx parameter (see NPL 14 (3GPP TS 38.214)).

In 3GPP, a sidelink (SL) is supported for device-to-device (D2D) communication and vehicle-to-vehicle (V2V) communication (see NPL 1 and NPL 16). The SL is defined by a PC5 interface.

In SL communication, support of PC5-S signaling is studied in order to support unicast and groupcast in addition to broadcast (see NPL 27 (3GPP TS 23.287)). For example, the PC5-S signaling is performed to establish the SL, that is, a link for performing PC5 communication. The link is performed in a V2X layer, and is also referred to as a layer 2 link.

In the SL communication, support of RRC signaling is studied (see NPL 27 (3GPP TS 23.287)). The RRC signaling in the SL communication is also referred to as PC5 RRC signaling. For example, notification of a UE capability and notification of an AS layer configuration and the like for performing V2X communication using the PC5 communication between the UEs performing the PC5 communication are proposed.

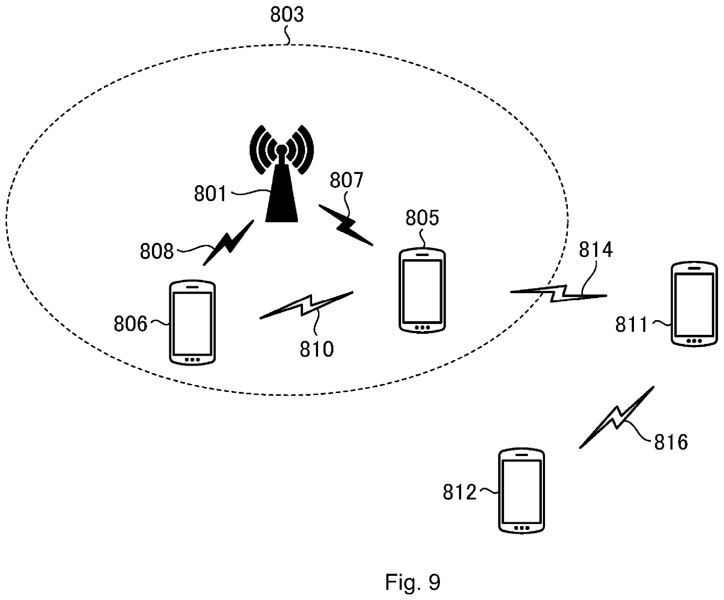

An example of a connection configuration of the mobile terminals in the SL communication is illustrated in Fig. 9. In the example illustrated in Fig. 9, a UE 805 and a UE 806 are present inside coverage 803 of a base station 801. UL/DL communication 807 is performed between the base station 801 and the UE 805. UL/DL communication 808 is performed between the base station 801 and the UE 806. SL communication 810 is performed between the UE 805 and the UE 806. A UE 811 and a UE 812 are present outside the coverage 803. SL communication 814 is performed between the UE 805 and the UE 811. SL communication 816 is performed between the UE 811 and the UE 812.

As an example of communication between the UE and the NW via relay in the SL communication, the UE 805 illustrated in Fig. 9 relays communication between the UE 811 and the base station 801.

A configuration similar to that of Fig. 4 may be used for the UE performing the relay. Relay processing in the UE will be described with reference to Fig. 4. Relay processing performed by the UE 805 in communication from the UE 811 to the base station 801 will be described. A radio signal from the UE 811 is received by the antennas 307-1 to 307-4. The received signal is converted from a radio reception frequency into a baseband signal in the frequency converting unit 306, and is subjected to demodulation processing in the demodulating unit 308. In the demodulating unit 308, weight calculation and multiplication processing may be performed. The demodulated data is delivered to a decoder unit 309, and is subjected to decoding processing such as error correction. The decoded data is delivered to the protocol processing unit 301, and is subjected to protocol processing of the MAC, the RLC, and the like used for communication with the UE 811, for example, operation such as removal of a header in each protocol. Protocol processing of the RLC, the MAC, and the like used for communication with the base station 801, for example, operation such as provision of a header in each protocol, is performed. In the protocol processing unit 301 of the UE 811, protocol processing of the PDCP and the SDAP may be performed. The data subjected to the protocol processing is delivered to the encoder unit 304, and is subjected to encoding processing such as error correction. There may be data that is directly output from the protocol processing unit 301 to the modulating unit 305 without being subjected to the encoding processing. The data subjected to the encoding processing in the encoder unit 304 is subjected to modulation processing in the modulating unit 305. In the modulating unit 305, MIMO precoding may be performed. The modulated data is converted into a baseband signal, and is then output to the frequency converting unit 306 to be converted into a radio transmission frequency. Subsequently, transmission signals are transmitted from the antennas 307-1 to 307-4 to the base station 801.

Although the above description illustrates an example of the relay performed by the UE 805 in communication from the UE 811 to the base station 801, similar processing is also used in relay in communication from the base station 801 to the UE 811.

A 5G base station can support an integrated access and backhaul (IAB) (see NPLs 2 and 20). A base station supporting the IAB (which may be hereinafter referred to as an IAB base station) includes an IAB donor CU being a CU of the base station that operates as an IAB donor providing an IAB function, an IAB donor DU being a DU of the base station that operates as an IAB donor, and an IAB node connected to the IAB donor DU and the UE using a radio interface. An F1 interface is provided between the IAB node and the IAB donor CU (see NPL 2).

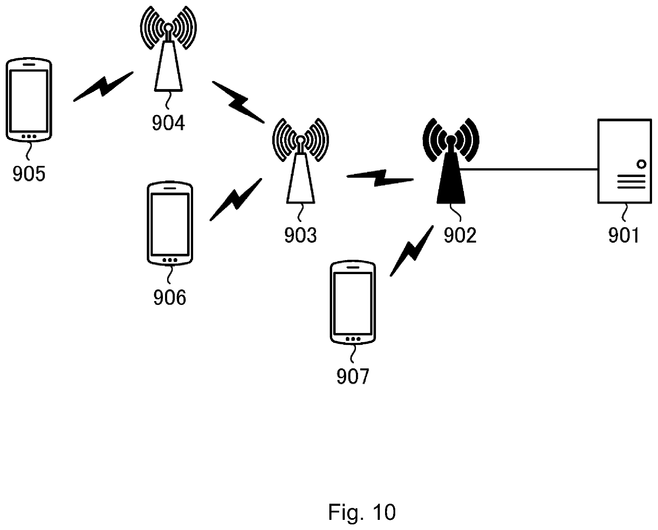

An example of connection of the IAB base stations is illustrated in Fig. 10. An IAB donor CU 901 is connected to an IAB donor DU 902. An IAB node 903 is connected to the IAB donor DU 902, using a radio interface. The IAB node 903 is connected to an IAB node 904, using a radio interface. In other words, multi-stage connection of the IAB nodes may be performed. A UE 905 is connected to the IAB node 904, using a radio interface. A UE 906 may be connected to the IAB node 903 using a radio interface, or a UE 907 may be connected to the IAB donor DU 902 using a radio interface. A plurality of IAB donor DUs 902 may be connected to the IAB donor CU 901, a plurality of IAB nodes 903 may be connected to the IAB donor DU 902, or a plurality of IAB nodes 904 may be connected to the IAB node 903.

A Backhaul Adaptation Protocol (BAP) layer is provided in connection between the IAB donor DU and the IAB node and connection between the IAB nodes (see NPL 29). The BAP layer performs operation such as routing of received data to the IAB donor DU and/or the IAB node and mapping of the received data to an RLC channel (see NPL 29).

As an example of a configuration of the IAB donor CU, a configuration similar to that of the CU 215 is used.

As an example of a configuration of the IAB donor DU, a configuration similar to that of the DU 216 is used. In the protocol processing unit of the IAB donor DU, processing of the BAP layer, for example, processing such as provision of a BAP header in downlink data, routing to the IAB node, and removal of the BAP header in uplink data, is performed.

As an example of a configuration of the IAB node, a configuration except the EPC communication unit 401, such another base station communication unit 402, and the 5GC communication unit 412 illustrated in Fig. 5 may be used.

Transmission and reception processing in the IAB node will be described with reference to Fig. 5 and Fig. 10. Transmission and reception processing of the IAB node 903 in communication between the IAB donor CU 901 and the UE 905 will be described. In uplink communication from the UE 905 to the IAB donor CU 901, a radio signal from the IAB node 904 is received by the antenna(s) 408 (a part or all of the antennas 408-1 to 408-4). The received signal is converted from a radio reception frequency into a baseband signal in the frequency converting unit 407, and is subjected to demodulation processing in the demodulating unit 409. The demodulated data is delivered to the decoder unit 410, and is subjected to decoding processing such as error correction. The decoded data is delivered to the protocol processing unit 403, and is subjected to protocol processing of the MAC, the RLC, and the like used for communication with the IAB node 904, for example, operation such as removal of a header in each protocol. Routing to the IAB donor DU 902 using a BAP header is performed, and protocol processing of the RLC, the MAC, and the like used for communication with the IAB donor DU 902, for example, operation such as provision of a header in each protocol, is performed. The data subjected to the protocol processing is delivered to the encoder unit 405, and is subjected to encoding processing such as error correction. There may be data that is directly output from the protocol processing unit 403 to the modulating unit 406 without being subjected to the encoding processing. The encoded data is subjected to modulation processing in the modulating unit 406. In the modulating unit 406, MIMO precoding may be performed. The modulated data is converted into a baseband signal, and is then output to the frequency converting unit 407 to be converted into a radio transmission frequency. Subsequently, transmission signals are transmitted to the IAB donor DU 902 from the antennas 408-1 to 408-4. Similar processing is also performed in downlink communication from the IAB donor CU 901 to the UE 905.

Transmission and reception processing similar to that of the IAB node 903 is also performed in the IAB node 904. In the protocol processing unit 403 of the IAB node 903, as processing of the BAP layer, for example, processing such as provision of a BAP header in uplink communication, routing to the IAB node 904, and removal of the BAP header in downlink communication is performed.

In a mobile communication system of 3GPP, the UE may connect to a plurality of NWs. Connection between the UE and the data network (DN) may be performed via an anchor UPF (a UPF that directly connects to the DN). An anchor NW (a network including the anchor UPF; hereinafter the same) may connect to one or the plurality of NWs connected to the UE. Note that, in the Specification, a NW not including the anchor UPF is referred to as a non-anchor NW. An apparatus constituting the anchor NW is referred to as an anchor NW apparatus, and an apparatus constituting the non-anchor NW is referred to as a non-anchor NW apparatus.

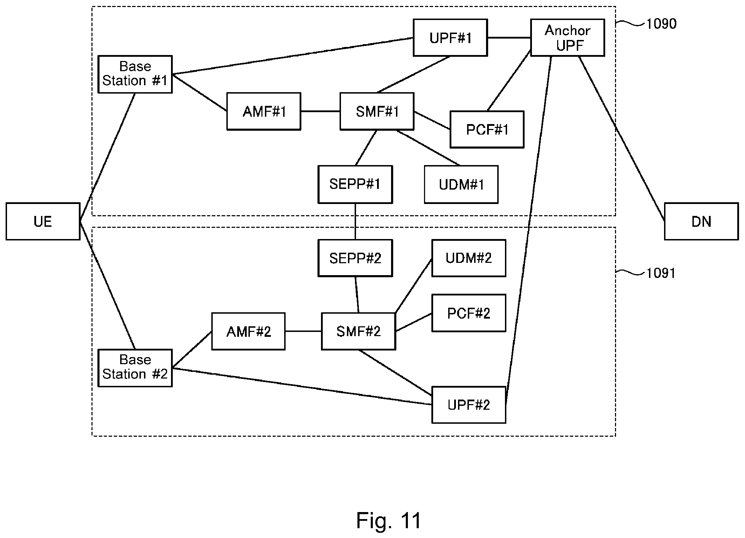

Fig. 11 is a configuration diagram illustrating an example in which the UE is connected to a plurality of NWs. In the example illustrated in Fig. 11, the UE is connected to each of a NW 1090 and a NW 1091. In the example illustrated in Fig. 11, each of base station #1, AMF #1, UPF #1, SMF #1, security edge protection proxy (SEPP: see NPL 10) #1, PCF #1, UDM #1, and the anchor UPF belongs to the NW 1090, and each of base station #2, AMF #2, UPF #2, SMF #2, SEPP #2, PCF #2, and UDM #2 belongs to the NW 1091. The anchor UPF is connected to the DN.

Switching of the NW to which the UE is to be connected may be performed. For example, the NW used for transmission and reception between the UE and the DN may be switched from the NW 1090 to the NW 1091, the NW may be switched from the NW 1091 to the NW 1090, or the NW may be switched to another NW. The switching may be performed for a part of traffic. For example, when the UE performs communication related to application 1 via the NW 1090 and performs communication related to application 2 via the NW 1091, a path of communication related to application 2 may be switched to the NW 1090.

In the switching, the following problem arises. In other words, there is a fear that switching of the NW is performed before data from the NW connected prior to the switching fully arrives at the UE, thus causing a loss of the data.

In the present embodiment, a method for solving the problem described above will be disclosed. Note that, in the following description, the NW to which the UE has been connected before switching of the NW to which the UE is to be connected is performed may be referred to as a switching source NW, and the NW to which the UE is to be connected after switching of the NW is performed may be referred to as a switching target NW. The base station to which the UE has been connected before switching of the NW to which the UE is to be connected is performed may be referred to as a switching source base station, and the base station to which the UE is to be connected after switching of the NW is performed may be referred to as a switching target base station.

In the present embodiment, the UE has protocol stacks respectively with a plurality of NWs. The UE may have protocol stacks respectively with two NWs, for example. For example, the UE has both of a protocol stack with the switching source NW and a protocol stack with the switching target NW. The UE may have both the protocol stacks simultaneously.

Both the protocol stacks of the UE may be protocol stacks at or below a protocol data unit (PDU) layer. For example, a change of an IP address in the UE may be performed. The UE may have a plurality of IP addresses.

The anchor UPF may have both the protocol stacks at or below the PDU layer. A change of an IP address in the anchor UPF may be performed. The anchor UPF may have a plurality of IP addresses.

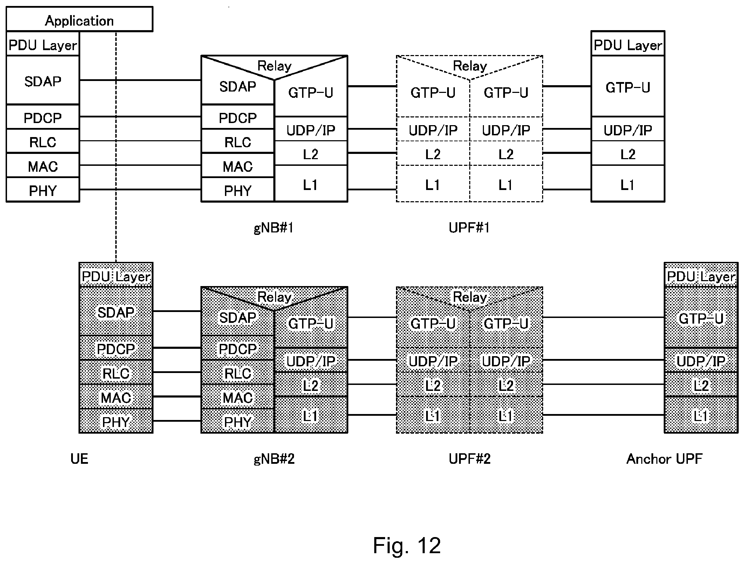

Fig. 12 is a diagram illustrating an example of protocol stacks between the UE and the anchor UPF. In the example illustrated in Fig. 12, the UE has a plurality of protocol stacks at or below the PDU layer. Fig. 12 illustrates configuration examples of a first protocol stack for the UE to communicate with the DN by connecting to the NW 1090 illustrated in Fig. 11 and a second protocol stack for the UE to communicate with the DN by connecting to the NW 1091 illustrated in Fig. 11.

As another example related to both the protocol stacks of the UE, there may be protocol stacks at or below the SDAP layer. The anchor UPF may have a plurality of protocol stacks at or below general packet radio service (GPRS) tunneling protocol for user plane (GTP-U). Consequently, for example, an IP address change along with NW switching of the UE becomes unnecessary.

As another example related to both the protocol stacks of the UE, there may be protocol stacks at or below the PDCP layer. The anchor UPF may have a plurality of protocol stacks at or below GTP-U. Consequently, for example, complexity related to association between a quality of service (QoS) flow and data in both the NWs can be avoided.

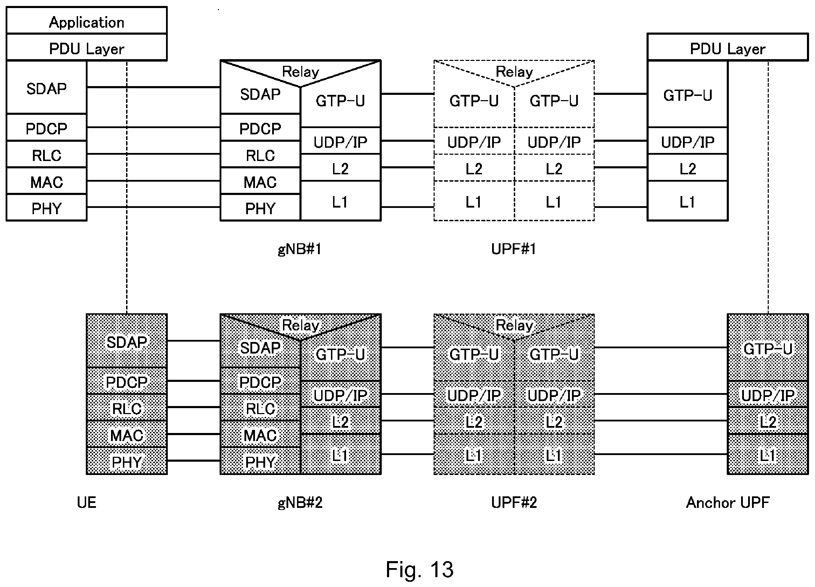

Fig. 13 is a diagram illustrating another example of protocol stacks between the UE and the anchor UPF. In the example illustrated in Fig. 13, the UE has a plurality of protocol stacks at or below the SDAP layer. The anchor UPF has a plurality of protocol stacks at or below GTP-U.

As another example related to both the protocol stacks of the UE, there may be protocol stacks at or below the PDCP layer. The anchor UPF may have a plurality of protocol stacks at or below GTP-U. Consequently, for example, memory usage in the UE can be reduced.

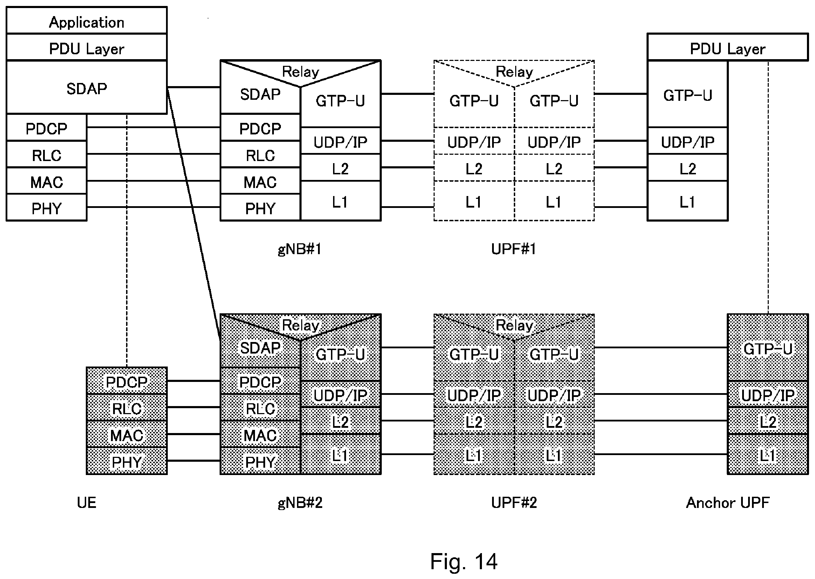

Fig. 14 is a diagram illustrating another example of protocol stacks between the UE and the anchor UPF. In the example illustrated in Fig. 14, the UE has a plurality of protocol stacks at or below the PDCP layer. The anchor UPF has a plurality of protocol stacks at or below GTP-U.

As another example related to both the protocol stacks of the UE, there may be protocol stacks at or below the RLC layer. The anchor UPF may have a plurality of protocol stacks at or below GTP-U. Consequently, for example, memory usage in the UE can be reduced.

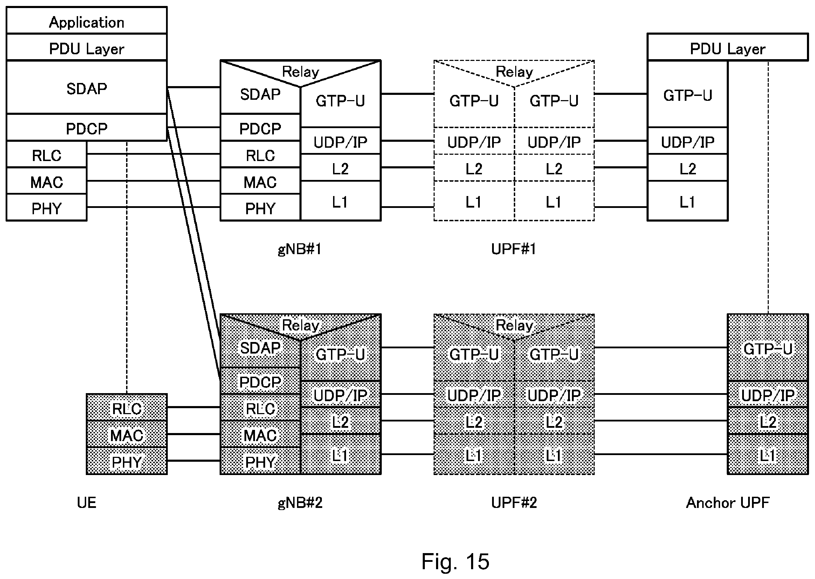

Fig. 15 is a diagram illustrating another example of protocol stacks between the UE and the anchor UPF. In the example illustrated in Fig. 15, the UE has a plurality of protocol stacks at or below the RLC layer. The anchor UPF has a plurality of protocol stacks at or below GTP-U.

For downlink data received from the DN via the anchor UPF, the UE may notify the base station of the other NW of information on a sequence number (which may be hereinafter referred to as a PDCP sequence number (SN)) of a PDCP PDU received from the base station (gNB) of one NW. The one base station may be a switching source base station, may be a switching target base station, or may be both described above. Consequently, for example, the PDCP SN received by the UE can be shared between the base stations of different NWs, and as a result, data retention awaiting reordering in the PDCP layer can be prevented. The notification may be performed as a PDCP status PDU, for example. In the notification, information indicating that it is downlink data may be included.

For uplink data transmitted to the DN via the anchor UPF, the UE may notify the base station of the other NW of information on a PDCP SN of a PDCP PDU transmitted to the base station of one NW. The one base station may be a switching source base station, may be a switching target base station, or may be both described above. Consequently, for example, the PDCP SN transmitted by the UE can be shared between the base stations of different NWs, and as a result, data retention awaiting reordering in the PDCP layer of the base station can be prevented. The notification may be performed as a PDCP status PDU, for example. The information may include information indicating that it is uplink data.

The NW may perform configuration of both the protocol stacks for the UE. The NW that performs the configuration may be the anchor NW, may be the switching source NW, or may be the switching target NW. The network function (NF) that performs the configuration may be the AMF, or may be the SMF. The configuration may or may not be included in an instruction of NW switching, for example. The instruction of NW switching may be an instruction of PDU session establishment, may be an instruction of PDU session modification, or may be an instruction of PDU session release, for example. The UE may maintain the protocol stack with the switching source NW, may establish the protocol stack with the switching target NW, or may perform both the operations described above, with the instruction being a trigger.

In the configuration, information on the NW corresponding to the UE may be included, information on the protocols having a plurality of protocol stacks (e.g., the PDU layer or below, SDAP or below, PDCP or below, RLC or below) may be included, information on the highest protocol in a plurality of protocol stacks (e.g., the PDU layer, SDAP, PDCP, RLC) may be included, or information on a configuration in each protocol (e.g., PDCP configuration information) may be included. The UE may generate the protocol stack, or may perform configuration in each protocol, by using the information.

The NF of the NW may determine whether NW switching maintaining both the protocols is performed. In the notification from the NW to the UE, information indicating whether NW switching maintaining both the protocols is performed may be included. The UE may perform NW switching maintaining both the protocols, or may not perform the NW switching, by using the information.

The NF of the NW may determine whether NW switching maintaining both the protocols is performed. In the notification from the NW to the UE, information indicating whether NW switching maintaining both the protocols is performed may be included. The UE may perform NW switching maintaining both the protocols, or may not perform the NW switching, by using the information. Consequently, for example, flexibility in the communication system can be enhanced.

In the UE, information on a configuration of both the protocol stacks may be provided. The information may be provided as a UE capability, for example. The UE may notify the NF of the NW, for example, the AMF, of the information. For example, the AMF may notify the SMF of the information. The NF of the NW, for example, the AMF and/or the SMF, may instruct the UE to perform measurement by using the information. The measurement instructed to the UE may be measurement related to a RAN, may be quality of service (QoS) monitoring (see NPLs 10 and 31), or may be quality of experience (QoE) measurement (see NPL 2).

As examples of the information, the following (1) to (6) are disclosed.
(1) Information on whether the UE can support both the protocol stacks.
(2) Information indicating which protocol or below the UE can have for both the protocol stacks.
(3) Information on a frequency band that can be supported by the UE.
(4) Buffer amount that can be supported by the UE for both the protocol stacks.
(5) Information on the switching target NW and/or the switching source NW.
(6) Combination of (1) to (5) described above.

With (1) described above, for example, the NW can quickly determine whether the configuration related to both the protocol stacks is possible.

(2) described above may be the PDU layer, may be SDAP, may be PDCP, or may be RLC, for example. Consequently, for example, the NW can quickly perform the configuration related to both the protocol stacks.

With (3) described above, for example, the NF that determines NW switching can quickly determine the switching target NW.

(4) described above may be a total buffer amount in both the NWs, or may be a buffer amount in the switching source NW and/or the switching target NW, for example. (4) described above may be a buffer amount in the PDU layer, may be a buffer amount in SDAP, may be a buffer amount in PDCP, may be a buffer amount in RLC, may be a buffer amount in MAC, may be a buffer amount in a HARQ, or may be a combination of a plurality of the above. Consequently, for example, the NF that determines NW switching can quickly determine the switching target NW.

(5) described above may be information indicating whether the information on the configuration of both the protocol stacks is information on the switching source NW or information on the switching target NW, for example. Consequently, for example, the NF that determines NW switching can quickly determine the switching target NW.

The NW may broadcast information on a configuration of the protocol stack of the NW itself to the UEs. In the information, for example, information similar to (1) to (6) described above may be included. For example, the information may include information obtained by replacing the UE with the NW itself in (1) to (6) described above. The UE may determine the NW to camp on by using the information. Consequently, for example, the UE can connect to the NW with high reliability.

The UE may establish the protocol stack with both the NWs, with the instruction of NW switching from the NF of the NW being a trigger. The UE may perform a response to the instruction of NW switching to the NW, with protocol stack establishment with both the NWs being a trigger. The response from the UE may be performed to the NF of the anchor NW, may be performed to the NF of the switching target NW, or may be performed to the NF of the switching source NW. The NF described above may be the SMF, or may be the AMF. The NF of the NW that has received the response may notify the NF of the switching target NW of information on the response from the UE. The notification may be performed via the SMF. The switching target NW may start reception of uplink data from the UE, or may start transmission of downlink data to the UE, with the notification being a trigger.

The switching source NW may transmit a packet with an end marker to the UE. The end marker may be added by the anchor UPF, or may be added by an intermediate UPF (a UPF that is not the anchor UPF) of the switching source NW.

The UE may release the protocol stack with the switching source NW. The release may be performed with reception of the end marker packet being a trigger, or may be performed with reception of packets up to the end marker packet being a trigger, for example. The UE may notify the NF of the NW of information on the release. The notification from the UE may be performed to the NF of the anchor NW, may be performed to the NF of the switching target NW, or may be performed to the NF of the switching source NW. The NF described above may be the SMF, or may be the AMF. The NF of the NW that has received the notification may notify the NF of the switching source NW of information on the notification from the UE. The switching source NW may release the protocol stack with the UE, with the notification being a trigger.

The notification may be performed as a response to the instruction of NW switching. For example, the UE may perform a plurality of responses to the instruction of NW switching.

The UE may switch a transmission target of uplink data from the switching source NW to the switching target NW. The switching may be performed with PDU session establishment request reception being a trigger, may be performed with PDU session modification request reception being a trigger, may be performed with signaling transmission of a PDU session establishment request positive response being a trigger, may be performed with signaling transmission of a PDU session modification request positive response being a trigger, or may be performed with protocol stack establishment with both the NWs being a trigger, for example.

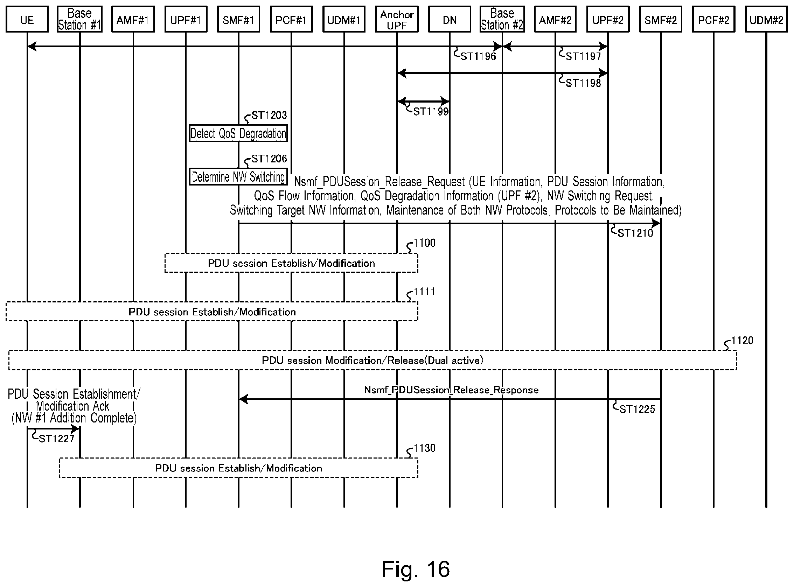

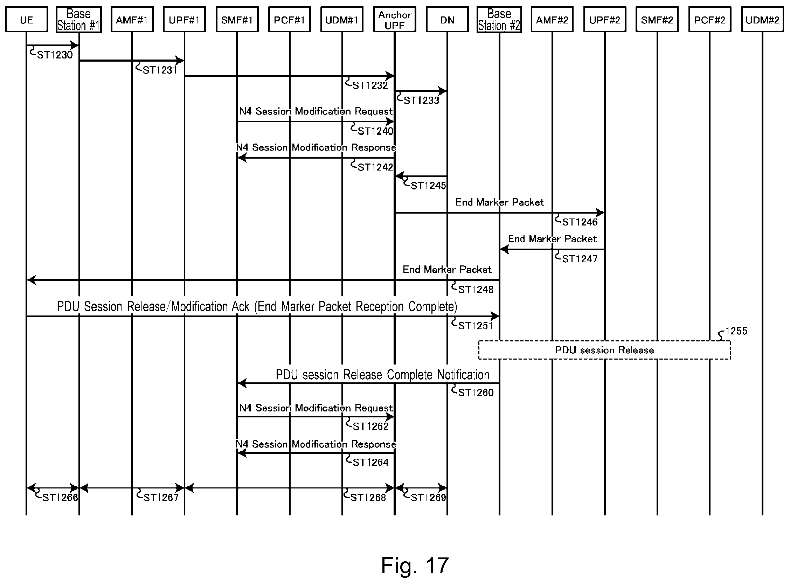

Fig. 16 and Fig. 17 are sequence diagrams illustrating an example of NW switching operation in which the protocols of both the NWs are maintained. Fig. 16 illustrates a first half of the sequence, and Fig. 17 illustrates a second half of the sequence. In the example illustrated in Fig. 16 and Fig. 17, a connection target of the UE switches from the NW 1091 being the non-anchor NW to the NW 1090 being the anchor NW. In the example illustrated in Fig. 16 and Fig. 17, an example is illustrated in which the anchor SMF detects QoS degradation in the NW 1091 being the non-anchor NW and the anchor SMF performs determination of NW switching. In the example illustrated in Fig. 16 and Fig. 17, base station #1, AMF #1, UPF #1, SMF #1, PCF #1, UDM #1, and the anchor UPF belong to the NW 1090, and base station #2, AMF #2, UPF #2, SMF #2, PCF #2, and UDM #2 belong to the NW 1091.

In Steps ST1196 to ST1199 illustrated in Fig. 16, data transmission and reception between the UE and the DN via the NW 1091 is performed. Step ST1196 indicates data transmission and reception between the UE and base station #2, Step ST1197 indicates data transmission and reception between base station #2 and UPF #2, Step ST1198 indicates data transmission and reception between UPF #2 and the anchor UPF, and Step ST1199 indicates data transmission and reception between the anchor UPF and the DN.

In Step ST1203 illustrated in Fig. 16, SMF #1 detects QoS degradation. In the example illustrated in Fig. 16, SMF #1 detects QoS degradation related to UPF #2. SMF #1 may detect the QoS degradation by using a QoS monitoring report from the anchor UPF and a QoS monitoring report from UPF #2.

In Step ST1206 illustrated in Fig. 16, SMF #1 determines switching of the NW as a path of data. In the example illustrated in Fig. 16, SMF #1 determines to switch the path of data through UPF #2 to the NW 1090.

In Step ST1206 illustrated in Fig. 16, SMF #1 may select whether to perform NW switching maintaining both the protocols. In the example illustrated in Fig. 16, SMF #1 determines to perform NW switching while the UE maintains the protocol stacks with both the NW 1090 and the NW 1091.

In Step ST1210 illustrated in Fig. 16, SMF #1 instructs SMF #2 to switch the NW. For the instruction, signaling of a PDU session release request may be used, or signaling of a PDU session modification request may be used. In the instruction, information on the UE may be included, information on a PDU session may be included, information on a QoS flow may be included, information on QoS degradation may be included, information on the UPF related to QoS degradation may be included, a NW switching request may be included, or information on the NW after path switching may be included.

In the instruction in Step ST1210, information indicating maintaining of the protocols of both the NWs may be included, or information on the protocols to be maintained may be included. The information on the protocols to be maintained may be the PDU layer or below, may be SDAP or below, may be PDCP or below, or may be RLC or below, for example.

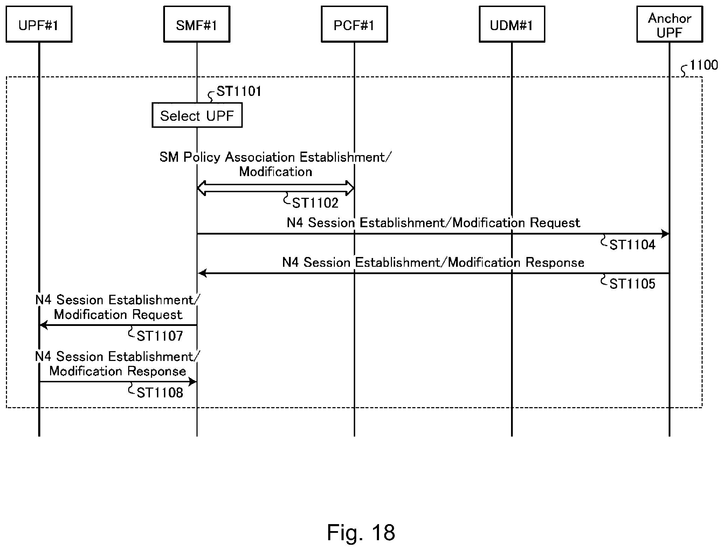

In Procedure 1100 illustrated in Fig. 16, connection establishment processing with the UPF in the NW 1090 is performed. Procedure 1100 will be described below. Fig. 18 is a sequence diagram illustrating an example of Procedure 1100 of Fig. 16.

In Step ST1101 illustrated in Fig. 18, SMF #1 selects the UPF. In the example illustrated in Fig. 18, SMF #1 selects UPF #1, and determines to use UPF #1.

In Step ST1102 illustrated in Fig. 18, a procedure of session management policy association establishment is performed between SMF #1 and PCF #1. The procedure may be a procedure disclosed in clause 4.16.4 of NPL 31 (3GPP TS 23.502), for example. In Step ST1102, a procedure of session management policy association modification may be performed. The procedure of session management policy association modification may be a procedure disclosed in clause 4.16.5 of NPL 31 (3GPP TS 23.502), for example.

In Step ST1104 illustrated in Fig. 18, SMF #1 requests the anchor UPF to perform N4 session establishment. The anchor UPF performs N4 session establishment, with Step ST1104 being a trigger. In Step ST1104, a request for N4 session modification may be performed. The anchor UPF may perform N4 session establishment, or may perform N4 session modification, with Step ST1104 being a trigger. In Step ST1105, the anchor UPF performs a response to Step ST1104 to SMF #1.

In Step ST1107 illustrated in Fig. 18, SMF #1 requests UPF #1 to perform N4 session establishment. UPF #1 performs N4 session establishment, with Step ST1107 being a trigger. In Step ST1108, UPF #1 performs a response to Step ST1107 to SMF #1. In Steps ST1107 and ST1108, a request for and a response to modification of the N4 session may be performed.

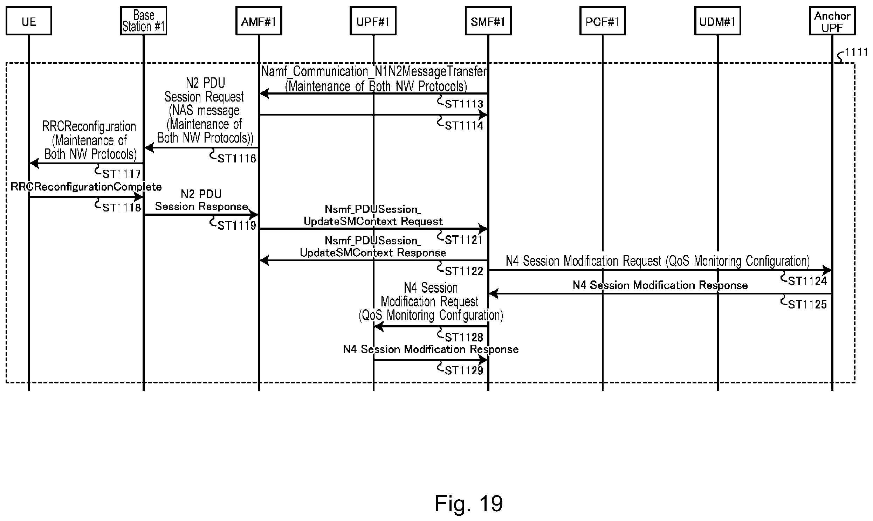

The description returns to that of Fig. 16. In Procedure 1111 illustrated in Fig. 16, PDU session establishment in the NW 1090 is performed. PDU session modification in the NW 1090 may be performed. Procedure 1111 will be described below. Fig. 19 is a sequence diagram illustrating an example of Procedure 1111 of Fig. 16.

In Step ST1113 and Step ST1114 illustrated in Fig. 19, transmission and reception of information necessary for PDU session establishment of the UE is performed between SMF #1 and AMF #1. Transmission and reception of information necessary for PDU session modification may be performed. In Step ST1113, from SMF #1 to AMF #1, an instruction of PDU session establishment may be performed, or an instruction of PDU session modification may be performed. In the instruction, the information described above may be included. In the information, information on the UE may be included, information on a PDU session may be included, information on a QoS flow may be included, or information on the UPF may be included. In the information, information indicating that the UE maintains the protocols of both the NWs may be included.

In Step ST1116 illustrated in Fig. 19, AMF #1 notifies base station #1 of a PDU session establishment request for the UE. A PDU session modification request may be notified. In the notification, information indicating that the UE maintains the protocols of both the NWs may be included. In Step ST1117, base station #1 notifies the UE of the PDU session establishment request. The PDU session modification request may be notified. In Step ST1117, RRC signaling, for example, signaling of RRC establishment, may be used, or signaling of RRC reconfiguration may be used. In the notification in Step ST1117, information indicating that the UE maintains the protocols of both the NWs may be included. The UE may perform processing of PDU session establishment, may perform processing of PDU session modification, or may maintain the protocol with the NW 1091, by using notification contents in Step ST1117.

In Step ST1118 illustrated in Fig. 19, the UE performs a response to Step ST1117 to base station #1. For the response, RRC signaling, for example, signaling of RRC establishment complete, may be used, or signaling of RRC reconfiguration complete may be used. In Step ST1119, base station #1 performs a response to Step ST1116 to AMF #1. In the response in Step ST1119, N2 session management information may be included.

In Step ST1121 illustrated in Fig. 19, AMF #1 notifies SMF #1 of the N2 session management information from base station #1. The notification may be performed by using signaling of Nsmf_PDUSession_UpdateSMContext Request (see NPL 31), for example. In Step ST1122, SMF #1 performs a response to Step ST1121 to AMF #1. For the response, signaling of Nsmf_PDUSession_UpdateSMContext Response (see NPL 31) may be used, for example.

In Step ST1124 illustrated in Fig. 19, SMF #1 requests the anchor UPF to perform N4 session modification. In the request, for example, a QoS monitoring configuration may be included. The anchor UPF may start QoS monitoring by using the configuration. In Step ST1125, the anchor UPF performs a response to Step ST1124 to SMF #1.

In Step ST1128 illustrated in Fig. 19, SMF #1 requests UPF #1 to perform N4 session modification. In the request, for example, a QoS monitoring configuration may be included. UPF #1 may start QoS monitoring by using the configuration. In Step ST1129, UPF #1 performs a response to Step ST1128 to SMF #1.

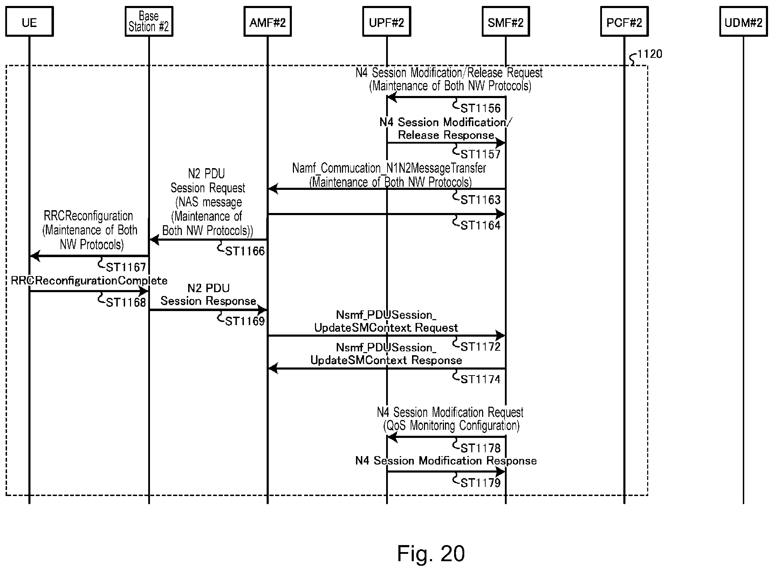

The description returns to that of Fig. 16. In Procedure 1120 illustrated in Fig. 16, PDU session release in the NW 1091 is performed. PDU session modification in the NW 1091 may be performed. Procedure 1120 will be described below. Fig. 20 is a sequence diagram illustrating an example of Procedure 1120 of Fig. 16.

In Step ST1156 illustrated in Fig. 20, SMF #2 requests UPF #2 to perform N4 session release. In the information, information indicating that the UE maintains both the protocols may be included. Instead of the request, N4 session release may be preliminarily notified. UPF #2 performs N4 session release, with Step ST1156 being a trigger. Preparation of N4 session release may be performed. In Step ST1157, UPF #2 performs a response to Step ST1156 to SMF #2.

In Step ST1163 and Step ST1164 illustrated in Fig. 20, transmission and reception of information necessary for PDU session release of the UE is performed between SMF #2 and AMF #2. Transmission and reception of information necessary for PDU session modification may be performed. In Step ST1163, from SMF #2 to AMF #2, an instruction of PDU session release may be performed, or an instruction of PDU session modification may be performed. In the instruction, the information described above may be included. In the information, information on the UE may be included, information on a PDU session may be included, information on a QoS flow may be included, or information on the UPF may be included. In the information, information indicating that the UE maintains the protocols of both the NWs may be included.

In Step ST1166 illustrated in Fig. 20, AMF #2 notifies base station #2 of a PDU session release request for the UE. A PDU session modification request may be notified. In the notification, information indicating that the UE maintains the protocols of both the NWs may be included. In Step ST1167, base station #2 notifies the UE of the PDU session release request. The PDU session modification request may be notified. In Step ST1167, RRC signaling, for example, signaling of RRC release, may be used, or signaling of RRC reconfiguration may be used. In the notification in Step ST1167, information indicating that the UE maintains the protocols of both the NWs may be included. The UE may perform processing of PDU session release, may perform processing of PDU session modification, or may maintain the protocol with the NW 1091, by using notification contents in Step ST1167.

In Step ST1168 illustrated in Fig. 20, the UE performs a response to Step ST1167 to base station #2. For the response, RRC signaling, for example, signaling of RRC reconfiguration complete, may be used. In Step ST1169, base station #2 performs a response to Step ST1166 to AMF #2. In the response in Step ST1169, N2 session management information may be included.

In Step ST1172 illustrated in Fig. 20, AMF #2 notifies SMF #2 of the N2 session management information from base station #2. The notification may be performed by using signaling of Nsmf_PDUSession_UpdateSMContext Request (see NPL 31), for example. In Step ST1174, SMF #2 performs a response to Step ST1172 to AMF #2. For the response, signaling of Nsmf_PDUSession_UpdateSMContext Response (see NPL 31) may be used, for example.

In Step ST1178 illustrated in Fig. 19, SMF #2 requests UPF #2 to perform N4 session modification. In the request, for example, a QoS monitoring configuration may be included. In Step ST1179, UPF #2 performs a response to Step ST1178 to SMF #2.

The description returns to that of Fig. 16. In Step ST1225, SMF #2 notifies SMF #1 of a response to the NW switching instruction. For the notification, signaling of a PDU session release request response may be used, or signaling of a PDU session modification response may be used. SMF #1 recognizes that a NW switching configuration in SMF #2 is performed, with the signaling being a trigger.

In Step ST1227 illustrated in Fig. 16, the UE notifies base station #1 of a positive response to the PDU session establishment request. A notification of a positive response to the PDU session modification request may be performed. The notification may be performed, with completion of PDU session establishment and/or modification being a trigger.

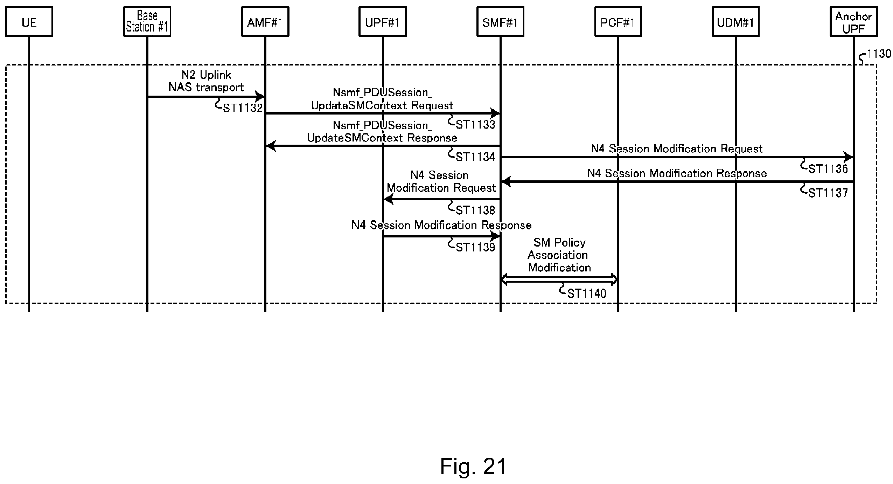

In Procedure 1130 illustrated in Fig. 16, continuation of PDU session establishment in NW 1090 is performed. Continuation of PDU session modification in NW 1090 may be performed. Procedure 1130 will be described below. Fig. 21 is a sequence diagram illustrating an example of Procedure 1130 of Fig. 16.

In Step ST1132 illustrated in Fig. 21, base station #1 notifies AMF #1 of information on the positive response of Step ST1227. In the notification in Step ST1132, N2 session management information may be included.

In Steps ST1133 and ST1134 illustrated in Fig. 21, processing similar to that of Steps ST1121 and ST1122 illustrated in Fig. 19 is performed.

In Steps ST1136 and ST1137 illustrated in Fig. 21, processing similar to that of Steps ST1124 and ST1125 illustrated in Fig. 19 is performed.

In Steps ST1138 and ST1139 illustrated in Fig. 21, processing similar to that of Steps ST1128 and ST1129 illustrated in Fig. 19 is performed.

In Step ST1140 illustrated in Fig. 21, a procedure of session management policy association modification is performed between SMF #1 and PCF #1. The procedure may be a procedure disclosed in clause 4.16.5 of NPL 31 (3GPP TS 23.502), for example.

Steps ST1230 to ST1233 illustrated in Fig. 17 are transmissions of uplink data from the UE via UPF #1. Step ST1230 indicates uplink data transmission from the UE to base station #1, Step ST1231 indicates uplink data transmission from base station #1 to UPF #1, Step ST1232 indicates uplink data transmission from UPF #1 to the anchor UPF, and Step ST1233 indicates uplink data transmission from the anchor UPF to the DN.

In Step ST1240 illustrated in Fig. 17, SMF #1 instructs the anchor UPF to add an end marker. For the instruction, for example, signaling of an N4 session modification request may be used. For example, in the request, an instruction to add the end marker may be included. Step ST1240 may be performed with reception of Step ST1225 being a trigger, or may be performed with completion of Procedure 1130 being a trigger, for example. In Step ST1242, the anchor UPF notifies SMF #1 of a response to the instruction. For the notification, for example, signaling of an N4 session modification response may be used.

Steps ST1245 to ST1248 illustrated in Fig. 17 are transmissions of downlink data from the DN to the UE via UPF #2. Step ST1245 indicates downlink data transmission from the DN to the anchor UPF, Step ST1246 indicates downlink data transmission from the anchor UPF to UPF #2, Step ST1247 indicates downlink data transmission from UPF #2 to base station #2, and Step ST1248 indicates downlink data transmission from base station #2 to the UE. In Step ST1246, the anchor UPF may transmit the downlink data from the DN with an end marker to UPF #2. The anchor UPF may transfer the downlink data received from the DN after the packet with the end marker to UPF #1. The operation of the anchor UPF may be performed, with transmission of Step ST1242 being a trigger.

In Step ST1251 illustrated in Fig. 17, the UE may notify base station #2 that the packet with the end marker has been received. The notification may be a notification indicating that packets up to the packet with the end marker have been received normally. In the notification, information on release of the protocol stacks may be included. The UE may perform the notification of Step ST1251, with reception of Step ST1248 being a trigger.

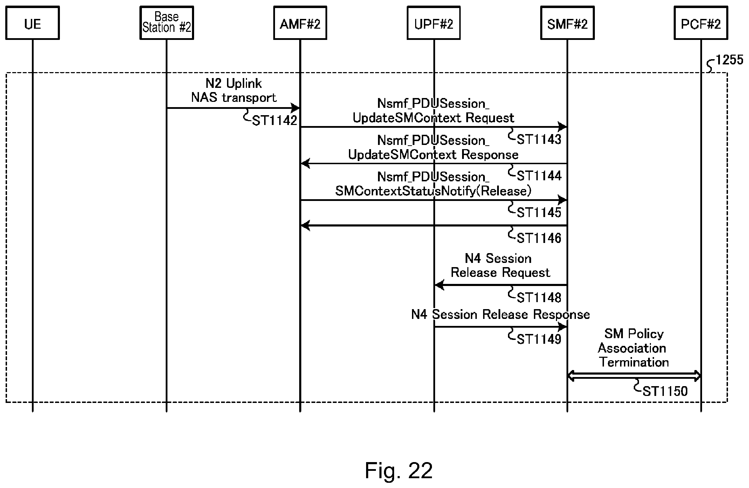

In Procedure 1255 illustrated in Fig. 17, PDU session release in the NW 1091 is performed. PDU session modification in the NW 1091 may be performed. Procedure 1255 will be described below. Fig. 22 is a sequence diagram illustrating an example of Procedure 1255 of Fig. 17.

In Step ST1142 illustrated in Fig. 22, base station #2 notifies AMF #2 of information that the UE has received the packet with the end marker. In the notification in Step ST1142, N2 session management information may be included.

In Steps ST1143 and ST1144 illustrated in Fig. 22, processing similar to that of Steps ST1121 and ST1122 in Fig. 19 is performed.

In Steps ST1145 and ST1146 illustrated in Fig. 22, a notification of session management information from AMF #2 to SMF #2 and a response to the notification from SMF #2 to AMF #2 are performed. In the notification, information on PDU session release may be included.

In Step ST1148 illustrated in Fig. 22, SMF #2 requests UPF #2 to perform N4 session release. UPF #2 performs N4 session release, with Step ST1148 being a trigger. In Step ST1149, UPF #2 performs a response to Step ST1148 to SMF #2.

In Step ST1150 illustrated in Fig. 22, a procedure of session management policy association termination is performed between SMF #2 and PCF #2. The procedure may be a procedure disclosed in clause 4.16.6 of NPL 31 (3GPP TS 23.502), for example.

The description returns to that of Fig. 17. In Step ST1260, base station #2 notifies SMF #1 of completion of PDU session release.

In Step ST1262 illustrated in Fig. 17, SMF #1 requests the anchor UPF to release connection with UPF #2. The request may be performed by using signaling of an N4 session modification request. The anchor UPF releases connection with UPF #2, with the signaling being a trigger. In Step ST1264, the anchor UPF performs a response to Step ST1262 to SMF #1.

In Steps ST1266 to ST1269 illustrated in Fig. 17, data transmission and reception between the UE and the DN via the NW 1090 is performed. Step ST1266 indicates data transmission and reception between the UE and base station #1, Step ST1267 indicates data transmission and reception between base station #1 and UPF #1, Step ST1268 indicates data transmission and reception between UPF #1 and the anchor UPF, and Step ST1269 indicates data transmission and reception between the anchor UPF and the DN.

A period related to release of the switching source NW may be provided. For example, a timer related to the release may be provided. The timer may be provided in the UE, for example. For example, the timer may start with the PDU session release request (e.g., Step ST1167 illustrated in Fig. 20) being a trigger, and may stop reception of the packet with the end marker being a trigger. For example, the UE may perform release operation from the switching source NW, with expiration of the timer being a trigger. Consequently, for example, the NW can be released even when the packet with the end marker fails to be received, and as a result, malfunctions in the communication system can be prevented.

The UE may activate NW switching while the UE has the protocol stacks respectively with the plurality of NWs. The UE may request the NW to switch a connection target. The request may be performed to the AMF. The AMF may transfer the request to the SMF. The NW may be the anchor NW, may be the non-anchor NW, may be the switching source NW, or may be the switching target NW. For processing of NW switching on the NW side, a method similar to the method disclosed in the above may be used.

NW switching disclosed in the first embodiment may be used in switching to a new NW. A registration operation of the UE to the new NW may be performed, or establishment of a PDU session in the new NW may be performed. For the registration operation, for example, the method disclosed in clause 4.2.2.2.2 in NPL 31 may be used. For the establishment of the PDU session, for example, the method disclosed in clause 4.3.2.2.1 in NPL 31 may be used. Consequently, for example, flexibility in the communication system can be enhanced.

According to the first embodiment, packet loss due to NW switching can be prevented.

### Second Embodiment.

Traffic splitting may be performed. For example, a part of packets of the same data traffic may pass through a certain NW, and other packets may pass through another NW. In traffic splitting, one PDU session may be split, or a plurality of PDU sessions may be established.

In configuring traffic splitting, the method disclosed in the first embodiment may be applied as appropriate. For a plurality of NWs, establishment and/or modification of the same PDU session may be performed. For example, when one PDU session is split, the method described above may be used.

As another example, information for associating a plurality of PDU sessions with each other may be notified. The information may be included in signaling of PDU session establishment and/or PDU session modification. For example, in the configuration of traffic splitting using a plurality of PDU sessions, the method described above may be used.

In uplink transmission from the UE, in determining to which base station of which NW among the NWs to which the UE has been connected the transmission is to be performed, the determination may be performed by using the buffer amount of the PDCP layer and the RLC layer. For example, when the buffer amount is equal to or greater than a predetermined threshold, the UE may transmit data to primary RLC or secondary RLC. When the buffer amount is less than the predetermined threshold, the UE may transmit data to primary RLC.

Primary RLC may be the RLC layer corresponding to the RLC layer of the anchor base station (the base station of the anchor NW), for example. As another example, the RLC layer corresponding to the RLC layer of the base station of which NW the primary RLC is may be separately determined. The determination may be performed by the NF of the anchor NW, for example. The NF may be the SMF, may be the AMF, or may be the base station.

When traffic splitting described above is performed, the following problem arises. In other words, even for the same traffic, transmission target base stations differ depending on packets, causing the SNs of the PDCP PDUs received by the respective base stations to be discontinuous. Thus, a problem arises in that the PDCP layers of the respective base stations cannot complete reordering and cannot transfer received data from the UE to higher layers.

In the present embodiment, a method for solving the problem described above will be disclosed.

In the present embodiment, the UE may notify the base station of information on the PDCP SN of the PDCP PDU to be transmitted. The base station may be the switching source base station, may be the switching target base station, or may be both described above. The notification may be performed as a PDCP status PDU, for example. As another example, the notification may be performed by using RRC signaling, may be performed as an RLC status PDU, may be performed as MAC signaling, or may be performed as L1/L2 signaling.

As another example, the base station of one NW to which the UE is connected may notify the base station of the other NW of information on the PDCP SN received from the UE. In the notification, information on the NW to which the base station itself belongs may be included, information on identification of the base station itself may be included, or information on a PDCP entity of the base station itself may be included. Consequently, for example, the other base station can quickly recognize a notification source base station. The notification may be performed by using an inter-base station interface, may be performed via the AMF, or may be performed via the SMF, for example. Consequently, for example, the processing amount in the UE can be reduced.

In the notification, information on the other NW may be included, information on identification of the base station of the other NW may be included, or information on a PDCP entity of the base station of the other NW may be included. Consequently, for example, the base station of the other NW can quickly recognize that it is a notification addressed to the base station itself.

In the notification, information on a PDU session may be included, or information on a QoS flow may be included. Consequently, for example, the other base station can quickly recognize the traffic.

As another example, the notification may be performed between base stations. For example, the notification may be performed via the AMF, may be performed via the SMF, may be performed via the SEPP, or may be performed via a plurality of the above. The notification may be directly performed between base stations. For example, the base station may inquire of a domain name system (DNS) about information on the other base station. The DNS may notify the base station of information on the other base station. Consequently, for example, the processing amount in the UE can be reduced.

Another solution will be disclosed. An application layer may route a transmission target NW. Consequently, for example, flexibility in routing can be enhanced.

A protocol stack in which the PDU layer or below is split may be provided. The UE may have a plurality of PDU layers. For example, the UE may have a plurality of IP addresses, or may have a plurality of MAC addresses. The protocol stack may have a configuration similar to that of the protocol stack disclosed in Fig. 12, for example.

Another solution will be disclosed. The PDU layer of the UE may route a transmission target NW.

A protocol stack in which the SDAP layer or below is split may be provided. The UE may have a plurality of SDAP layers. The protocol stack may have a configuration similar to that of the protocol stack disclosed in Fig. 13, for example. Consequently, for example, the UE need not have a plurality of IP addresses, and as a result, complexity of the UE is reduced as compared to the above-described case.

The PDU layer of the UE may perform routing with reference to the buffer amount accumulated in the PDU layer itself, for example. For example, when the buffer amount is greater than or is equal to or greater than a predetermined threshold, the UE may transmit data to either one of both the NWs, and when the buffer amount is equal to or less than or is less than the predetermined threshold, the UE may transmit data to one NW. The NW being a transmission target of uplink data in the above-described case may be hereinafter referred to as a main NW. As another example, when the buffer amount is greater than or is equal to or greater than the predetermined threshold, the UE may transmit data to either one NW, and when the buffer amount is equal to or less than or is less than the predetermined threshold, the UE may transmit data to the other NW.

The one NW described above may be the anchor NW, or may be the non-anchor NW. Consequently, for example, flexibility in communication can be enhanced.

In the buffer amount, the buffer amount of a lower layer may be included. For example, the buffer amount of the SDAP layer may be included, the buffer amount of the PDCP layer may be included, the buffer amount of the RLC layer may be included, the buffer amount of the MAC layer or below may be included, the buffer amount in the PHY layer may be included, or the buffer amount of a plurality of the above may be included. Consequently, for example, routing in consideration of a total buffer amount of the UE can be performed.

For the routing described above, the buffer amount of each PDU session may be used, or the buffer amount of each QoS flow may be used. Consequently, for example, flexible routing can be performed for each traffic.

The lower layer of the UE may notify the PDU layer of the buffer amount of the lower layer. The lower layer may be SDAP, may be PDCP, may be the RLC layer, or may be the MAC layer. The buffer amount may be the buffer amount of each PDU session, or may be the buffer amount of each QoS flow. Consequently, for example, the PDU layer can quickly recognize the buffer amount of the lower layer.

As another example, QoS may be used for routing. For example, the UE may transmit data to the NW having good QoS. Consequently, for example, the QoS of uplink communication can be secured.

The UE may perform QoS monitoring. The UE may perform the routing by using results of QoS monitoring. In the QoS monitored by the UE, for example, information on uplink and/or downlink packet delay may be included, information on congestion may be included, a data rate may be included, dispersion of packet delay may be included, information on round-trip packet delay may be included, or information on uplink delay in the UE (e.g., a difference between a time at which uplink data is to be originally transmitted and a time at which it is actually transmitted) may be included.

In routing using QoS, a threshold may be used. For example, when QoS in one NW is better than or is equal to a predetermined threshold, the NW may be continuously used, and when the QoS is poorer than or is equal to the predetermined threshold, data may be transmitted to the other NW. The one NW described above may be the anchor NW, or may be the non-anchor NW. Consequently, the QoS in uplink transmission can be secured. For the threshold, hysteresis may be provided. Consequently, for example, frequent switching of a transmission target NW of uplink data can be prevented.

Routing using a QoS flow may be performed for each QoS flow. For example, a QoS flow for which latency is required may pass through the NW with low latency, and a QoS flow for which reliability is required may pass through the NW with high reliability. Consequently, for example, the QoS of each QoS flow can be secured.

The threshold described above may be determined by the PCF. For example, it may be determined by a PCF of the anchor NW (which may be hereinafter referred to as an anchor PCF). The anchor PCF may notify the anchor SMF of the threshold. The anchor SMF may notify the UE of the threshold. The notification from the anchor SMF may be performed via the anchor AMF, or may be performed via the anchor base station.

As another example, the threshold described above may be determined by the SMF. For example, it may be determined by the anchor SMF. The anchor SMF may determine the threshold by using a policy notified from the anchor PCF. The anchor SMF may notify the UE of the threshold. The notification from the anchor SMF to the UE may be performed similarly to the above.

As another example, the threshold described above may be determined by the AMF, for example, the anchor AMF, or may be determined by the base station, for example, the anchor base station. The AMF and/or the base station described above may notify the UE of the threshold.

As another example, the threshold described above may be determined by a network data analytics function (NWDAF). Consequently, for example, flexible threshold determination can be performed, based on a condition of the NW. The NWDAF may notify the UE of the threshold. The notification may be performed via the AMF, may be performed via the base station, or may be directly performed to the UE.

The above-described method for determining which NW the one NW is may also be similar to that for the threshold described above.

Another solution will be disclosed. The SDAP layer of the UE may route a transmission target NW.

A protocol stack in which the PDCP layer or below is split may be provided. The UE may have a plurality of PDCP layers. The protocol stack may have a configuration similar to that of the protocol stack disclosed in Fig. 14, for example. Consequently, for example, complexity of the UE can be reduced by the UE having respective PDCP layers corresponding to the base stations of respective NWs, and the processing amount of the UE can be reduced by having one SDAP layer.

The SDAP layer of the UE may perform routing with reference to the buffer amount accumulated in the SDAP layer itself, for example. For example, when the buffer amount is greater than or is equal to or greater than a predetermined threshold, the UE may transmit data to either one of both the NWs, and when the buffer amount is equal to or less than or is less than the predetermined threshold, the UE may transmit data to one NW. As another example, when the buffer amount is greater than or is equal to or greater than the predetermined threshold, the UE may transmit data to either one NW, and when the buffer amount is equal to or less than or is less than the predetermined threshold, the UE may transmit data to the other NW.

The one NW described above may be the anchor NW, or may be the non-anchor NW. Consequently, for example, flexibility in communication can be enhanced.

In the buffer amount, the buffer amount of a lower layer may be included. For example, the buffer amount of the PDCP layer may be included, the buffer amount of the RLC layer may be included, the buffer amount of the MAC layer or below may be included, the buffer amount in the PHY layer may be included, or the buffer amount of a plurality of the above may be included. Consequently, for example, routing in consideration of a total buffer amount of the UE can be performed.

For the routing described above, the buffer amount of each PDU session may be used, or the buffer amount of each QoS flow may be used. Consequently, for example, flexible routing can be performed for each traffic.

The lower layer of the UE may notify the SDAP layer of the buffer amount of the lower layer. The lower layer may be PDCP, may be the RLC layer, or may be the MAC layer. The buffer amount may be the buffer amount of each PDU session, or may be the buffer amount of each QoS flow. Consequently, for example, the SDAP layer can quickly recognize the buffer amount of the lower layer.

As another example, QoS may be used for routing. For routing using QoS, for example, a method similar to the method disclosed in the routing by the PDU layer described above may be used. The same may apply to the threshold. The same may apply to the method for determining which NW the one NW is.

A primary NW may be provided, and a secondary NW may be provided. For example, when the buffer amount disclosed in the present embodiment is equal to or greater than the predetermined threshold, the UE may transmit data to the primary NW or the secondary NW. When the buffer amount is less than the predetermined threshold, the UE may transmit data to the primary NW.

The primary NW may be the anchor NW, for example. The secondary NW may be the non-anchor NW, for example.

As another example, which NW the primary NW is may be determined and notified to the UE. The determination may be performed by the anchor NW, for example. The anchor NW may notify the UE of information indicating which NW the primary NW is. The notification may be performed together with the notification of the threshold described above, for example.

Regardless of the buffer amount, data may be transmitted from the UE to either one of the NWs. For example, by setting a value of the threshold described above to 0 or a negative value, the UE may be able to transmit data to either one of the NWs. Consequently, for example, flexibility in the communication system can be enhanced.

According to the second embodiment, reordering in the base station completes, and received data from the UE can be quickly transferred to higher layers.

### First Alteration of Second Embodiment.

Routing of uplink data in the UE may be performed, with an instruction from the NW being a trigger. The instruction may be performed with a failure and/or congestion in one NW being a trigger, or may be performed with a failure and/or congestion in the other NW being a trigger, for example.

The instruction from the NW may be performed, with the QoS satisfying a predetermined condition being a trigger. QoS monitoring may be performed in the NW. The predetermined condition may be that results of QoS monitoring are better than, poorer than, and/or equal to the predetermined threshold.

QoS monitoring may be performed in the UPF, or may be performed in the base station. In the QoS monitored by the UPF and/or the base station, for example, information on uplink and/or downlink packet delay may be included, information on congestion may be included, a data rate may be included, dispersion of packet delay may be included, or information on round-trip packet delay may be included.

Determination of the threshold related to QoS monitoring may be performed in an application layer, or may be determined by the PCF of one NW, for example. The one NW may be the anchor NW, may be the non-anchor NW, or may be the NW to which the NF performing QoS monitoring belongs, for example.

The instruction related to routing may be performed by the NF of one NW. The one NW may be the anchor NW, may be the non-anchor NW, may be the NW detecting a failure and/or congestion, or may be the NW not detecting a failure and/or congestion, for example.

The NF may be the SMF, for example. The SMF may perform the instruction to the UE. The instruction from the SMF to the UE may be performed via the AMF, or may be performed via the base station. As another example, the SMF may perform the instruction to the base station. The instruction from the SMF to the base station may be performed via the AMF.

The base station may notify the UE of information on routing. For the notification, for example, RRC signaling may be used. Consequently, for example, a large amount of information can be notified from the base station to the UE. As another example, for the notification, MAC signaling may be used. Consequently, for example, the base station can quickly perform notification of the information. As another example, for the notification, L1/L2 signaling may be used. Consequently, for example, the base station can more quickly perform notification of the information. The UE may switch the main NW by using the information.

As another example related to the NF, the NF may be the AMF. The AMF may perform the instruction to the UE. The instruction from the AMF to the UE may be performed via the base station. As another example, the SMF may perform the instruction to the base station. The notification of the information on routing from the base station to the UE may be performed similarly to the above. The UE may switch the main NW by using the information.

In the instruction, information on switching of the main NW may be included, or information on the threshold disclosed in the second embodiment may be included. In the information on switching of the main NW, for example, information indicating that the main NW is to be switched may be included. Consequently, for example, the size of signaling can be reduced. As another example, in the information, information on the NW after being switched may be included. Consequently, for example, the UE can quickly recognize the NW after being switched.

In the information, information on traffic related to switching of the main NW may be included. For example, information on a PDU session may be included, or information on a QoS flow may be included.

According to the first alteration, quick path switching at the time of NW splitting of traffic can be performed, and as a result, quick communication can be performed between the UE and the DN.

### Second Alteration of Second Embodiment.

Routing in C-plane data may be performed.

For the routing, for example, the method disclosed in the second embodiment may be used, or the method disclosed in the first alteration of the second embodiment may be used. For example, for the routing, the buffer amount of the NAS layer may be used instead of the PDU layer disclosed in the second embodiment, or the buffer amount of the RRC layer may be used instead of the SDAP layer.

Similarly to the second embodiment, the buffer amount of the lower layer may be used. For example, the RRC layer may notify the NAS layer of the buffer amount of the lower layer. The notification may be performed by the PDCP layer, may be performed by the RLC layer, may be performed by the MAC layer, or may be performed by the PHY layer. As another example, the PDCP layer may notify the RLC layer of the buffer amount of the lower layer. The notification may be performed by the MAC layer, or may be performed by the PHY layer.

Between U-plane data and C-plane data, the same threshold may be used, or different thresholds may be used. Between U-plane data and C-plane data, a routing target NW in a case of being equal to or less than or being less than a threshold may be the same, or may be different. Between U-plane data and C-plane data, the primary NW may be the same, or may be different.

The NF of the routing target NW may transfer C-plane data transmitted from the UE to the NF of another NW. The NF may be the base station, may be the AMF, may be the SMF, or may be the NWDAF, for example.

According to the second alteration, even when a failure, congestion, or the like of one NW occurs, C-plane data can be transmitted to the NW.

### Third Embodiment.

Switching of the NW as a path of data may be performed. For example, in data transmission and reception via the switching source NW, with a failure and/or congestion of the NF (e.g., the UPF) of the switching source NW being a trigger, a path of the data transmission and reception may be switched to the switching target NW. The switching source NW may be the anchor NW, or may be the non-anchor NW. The switching target NW may be the non-anchor NW, or may be the anchor NW.

Traffic splitting (which may be hereinafter referred to as NW splitting) may be performed. For example, a part of packets of the same data traffic may pass through a certain NW, and other packets may pass through another NW. In traffic splitting, one PDU session may be split, or a plurality of PDU sessions may be established.

However, in switching of the NW, a problem arises in that time is required until the switching completes.

In NW splitting, a problem arises in that resources related to the traffic need to be secured in both the NFs (for example, the UPFs) of the anchor NW and the non-anchor NW, and thus resources secured in the NW through which data does not pass become a waste.

In the third embodiment, a method for solving the problem described above will be disclosed.

In the present embodiment, in switching of the NW, a configuration of switching is performed in advance (which may be hereinafter referred to as a preconfiguration) for each NF of the NW being a switching target. When NW switching is actually performed, the configuration of switching is performed for the UE. The configuration of NW switching for the base station may also be performed when the configuration of NW switching is actually performed. Actual NW switching may be performed, with satisfaction of a predetermined condition being a trigger.

The predetermined condition may be a condition related to QoS, or may be a condition related to QoE, for example. As an example of the predetermined condition, QoS (e.g., latency) of certain traffic may be poorer than a predetermined threshold. For detection of the predetermined condition, a QoS monitoring report (see NPLs 10 and 31) may be used, or results of QoE measurement (see NPL 2) may be used.

The switching of the NW as a path of data may be activated by the NF of the anchor NW, for example. The NF may be the SMF, for example. The switching of the NW may be switching from the non-anchor NW to the anchor NW, for example.

The anchor SMF may notify the non-anchor NW of information on switching of the NW. The notification may be performed to the non-anchor SMF, for example. The notification may be performed as a request for PDU session modification, or may be performed as a request for PDU session release, for example. For the notification, signaling of Nsmf_PDUSession_Modification_Request (see NPL 31) may be used, or signaling of Nsmf_PDUSession_Release_Request (see NPL 31) may be used, for example. In the notification, information indicating that it is NW switching using a preconfiguration may be included, information on the UE may be included, information on a PDU session may be included, or information on a QoS flow may be included. The non-anchor NW may maintain connection with the UE in the NW itself, with inclusion of the information indicating that it is NW switching using a preconfiguration in the notification being a trigger.

The non-anchor SMF may request information on the preconfiguration of NW switching from the non-anchor AMF. In the request, a request for NAS signaling information for the UE may be included. The NAS signaling may be NAS configuration information (e.g., a NAS configuration to be released) related to PDU session modification, for example. The non-anchor AMF may notify the non-anchor SMF of the NAS signaling information. The notification from the non-anchor AMF to the non-anchor SMF may be performed, with the request from the non-anchor SMF to the non-anchor AMF being a trigger.

In the NAS signaling, information on RRC signaling for the UE may be included. The RRC signaling may be RRC configuration information (e.g., an AS configuration to be released) related to PDU session modification, for example. The non-anchor AMF may request RRC signaling information from a base station of the non-anchor NW (which may be hereinafter referred to as a non-anchor base station). The non-anchor base station may notify the non-anchor AMF of the RRC signaling information. The notification from the non-anchor base station to the non-anchor AMF may be performed, with the request from the non-anchor AMF to the non-anchor base station being a trigger.

The non-anchor SMF may perform a response to the NW switching request to the anchor SMF. The response may be performed as a response to the PDU session modification request, or may be performed as a response to the PDU session release request, for example. For the response, signaling of Nsmf_PDUSession_Modification_Response (see NPL 31) may be used, or signaling of Nsmf_PDUSession_Release_Response (see NPL 31) may be used, for example. In the response, for example, information on NAS signaling may be included. The NAS signaling may be the NAS signaling related to PDU session modification described above, for example. The NAS signaling may be NAS signaling acquired from the non-anchor AMF, for example. In the NAS signaling, RRC signaling may be included. The RRC signaling may be the RRC signaling related to PDU session release described above, for example. The RRC signaling may be RRC signaling acquired from the non-anchor base station, for example.

The anchor SMF may perform a preconfiguration in the anchor NW. For example, a UPF configuration may be performed. The UPF that performs the configuration may be the intermediate UPF of the anchor NW, or may be the anchor UPF, for example. In the UPF configuration, for example, a part or all of processing disclosed in PDU session establishment (clause 4.3.2 in NPL 31) may be performed.

The anchor SMF may perform a configuration related to switching of the NW for the anchor UPF. For example, the anchor SMF may perform a preconfiguration of connection release between the non-anchor NW and the intermediate UPF for the anchor UPF. The anchor UPF may prepare connection release with the intermediate UPF, with the configuration being a trigger.

The anchor SMF may perform a preconfiguration of PDU session modification for the anchor AMF. In the preconfiguration, NAS signaling information of the switching source NW (e.g., the non-anchor NW) may be included, or RRC signaling information of the switching source NW (e.g., the non-anchor NW) may be included. The anchor AMF may or may not request the anchor base station to perform an RRC configuration related to NW switching in advance. The anchor AMF may notify the anchor base station of RRC signaling information of the switching source NW (e.g., the non-anchor NW). The notification may be included in the request described above, for example.

The anchor SMF may activate NW switching, with satisfaction of the predetermined condition being a trigger.

The anchor SMF may notify the anchor AMF of satisfaction of the predetermined condition. The notification from the anchor SMF to the anchor AMF may be performed with satisfaction of the predetermined condition being a trigger, or may be performed with the response from the non-anchor SMF to the anchor SMF being a trigger, for example.

The anchor AMF may perform a configuration of resources related to the UE, with the notification being a trigger. The anchor AMF may request the anchor base station to perform establishment of a PDU session related to the UE, or may request the anchor base station to perform modification of a PDU session. In the request, NAS signaling and/or RRC signaling related to PDU session modification of the non-anchor NW may be included, or NAS signaling related to the preconfiguration of PDU session modification of the anchor NW may be included. The anchor base station may request the UE to perform establishment of a PDU session, or may request the UE to perform modification of a PDU session, with the request being a trigger. For the request, RRC signaling may be used. In the RRC signaling, NAS signaling and/or RRC signaling related to PDU session modification of the non-anchor NW may be included, or NAS signaling and/or RRC signaling related to the preconfiguration of PDU session modification of the anchor NW may be included. The UE may establish a PDU session, or may perform modification of a PDU session, with the RRC signaling being a trigger. The UE may transmit a response to the request for PDU session establishment or modification to the anchor base station. The anchor base station may notify the anchor AMF of the response from the UE.

The anchor AMF may notify the anchor SMF of the response from the UE.

The anchor SMF may notify the non-anchor SMF of satisfaction of the predetermined condition. The non-anchor SMF may perform operation of NW switching to the anchor NW, with the notification being a trigger. For example, release of the UPF on the non-anchor NW side may be performed. The non-anchor SMF may request the UPF as a path of data transmission and reception to perform connection release. For the request, for example, signaling of N4 session release may be used.

The non-anchor SMF may notify the non-anchor AMF of satisfaction of the predetermined condition. The non-anchor AMF may release the resources related to the UE, with the notification being a trigger. The non-anchor AMF may request the non-anchor base station to release the resources related to the UE. The non-anchor base station may release the resources related to the UE, with the request being a trigger.

The non-anchor SMF may notify the anchor SMF of release of the resources related to the UE. The notification may be performed as a response to the notification of satisfaction of the predetermined condition, for example.

The non-anchor AMF may notify the non-anchor SMF of release of the resources. The notification may be performed as a response to the notification of satisfaction of the predetermined condition.

The method disclosed in the present embodiment may also be applied to path switching from the anchor NW to the non-anchor NW. The switching of the NW as a path of data may be activated by the NF of the anchor NW, for example. The NF may be the SMF, for example.

The anchor SMF may request the non-anchor SMF to perform a preconfiguration of NW switching. The request may be performed as a request for PDU session modification, or may be performed as a request for PDU session establishment, for example. For the notification, signaling of Nsmf_PDUSession_Modification_Request (see NPL 31) may be used, or signaling of Nsmf_PDUSession_Establish_Request (see NPL 31) may be used, for example. In the notification, information indicating that it is NW switching using a preconfiguration may be included, information on the UE may be included, information on a PDU session may be included, or information on a QoS flow may be included. The non-anchor NW may maintain connection with the UE in the NW itself, with inclusion of the information indicating that it is NW switching using a preconfiguration in the notification being a trigger.

The non-anchor SMF may perform a preconfiguration in the non-anchor NW. For example, the non-anchor SMF may perform a preconfiguration of the UPF. The UPF that performs the preconfiguration may be the intermediate UPF of the non-anchor NW, for example. In the preconfiguration of the UPF, for example, a part or all of processing disclosed in PDU session establishment (clause 4.3.2 in NPL 31) may be performed.

The non-anchor SMF may perform a preconfiguration of PDU session modification and/or establishment for the non-anchor AMF. The non-anchor SMF may request information on the preconfiguration of NW switching from the non-anchor AMF. In the request, a request for NAS signaling information for the UE may be included. The NAS signaling may be NAS configuration information (e.g., a NAS configuration to be established) related to PDU session modification and/or establishment, for example. The non-anchor AMF may notify the non-anchor SMF of the NAS signaling information. The notification from the non-anchor AMF to the non-anchor SMF may be performed, with the request from the non-anchor SMF to the non-anchor AMF being a trigger.

In the NAS signaling, information on RRC signaling for the UE may be included. The RRC signaling may be RRC configuration information (e.g., an AS configuration to be established) related to PDU session modification and/or establishment, for example. The non-anchor AMF may request RRC signaling information from the non-anchor base station. The non-anchor base station may notify the non-anchor AMF of the RRC signaling information. The notification from the non-anchor base station to the non-anchor AMF may be performed, with the request from the non-anchor AMF to the non-anchor base station being a trigger.

The non-anchor SMF may perform a response to the preconfiguration request to the anchor SMF. The response may be performed as a response to the PDU session modification request, or may be performed as a response to the PDU session release request, for example. For the response, signaling of Nsmf_PDUSession_Modification_Response may be used, or signaling of Nsmf_PDUSession_Release_Response may be used, for example. In the response, for example, information on NAS signaling may be included. The NAS signaling may be the NAS signaling related to PDU session modification and/or establishment described above, for example. The NAS signaling may be NAS signaling acquired from the non-anchor AMF, for example. In the NAS signaling, RRC signaling may be included. The RRC signaling may be the RRC signaling related to PDU session modification and/or establishment described above, for example. The RRC signaling may be RRC signaling acquired from the non-anchor base station, for example.

The non-anchor SMF may perform a preconfiguration of PDU session modification and/or PDU session establishment for the non-anchor AMF. In the notification, NAS signaling information of the switching target NW (e.g., the non-anchor NW) for the UE may be included, or RRC signaling information of the switching target NW (e.g., the non-anchor NW) may be included. The non-anchor AMF may or may not request the non-anchor base station to perform an RRC configuration related to NW switching in advance. The non-anchor base station may notify the non-anchor AMF of RRC signaling information of the switching target NW (e.g., the non-anchor NW). The notification may be included in the request described above, for example.

The anchor SMF may activate NW switching, with satisfaction of the predetermined condition being a trigger. The anchor SMF may notify the non-anchor SMF of satisfaction of the predetermined condition.

The non-anchor SMF may request the non-anchor AMF to reflect the preconfiguration. The non-anchor AMF may reflect the preconfiguration, with the request being a trigger. The non-anchor AMF may request the non-anchor base station to reflect the preconfiguration. The non-anchor base station may reflect the preconfiguration, with the request being a trigger. The non-anchor base station may notify the non-anchor AMF of completion of reflection of the preconfiguration. The non-anchor AMF may notify the non-anchor SMF of completion of reflection of the preconfiguration.

The non-anchor SMF may notify the anchor SMF of completion of preconfiguration reflection.

The anchor SMF may notify the anchor AMF of satisfaction of the predetermined condition. The anchor AMF may perform modification and/or release of the resources related to the UE, with the notification being a trigger. The anchor AMF may request the anchor base station to perform release of the PDU session related to the UE, or may request the anchor base station to perform modification of the PDU session. In the request, NAS signaling and/or RRC signaling related to the preconfiguration of PDU session modification and/or establishment of the non-anchor NW may be included, or NAS signaling related to PDU session modification and/or release of the anchor NW may be included. The anchor base station may request the UE to perform release of the PDU session, or may request the UE to perform modification of the PDU session, with the request being a trigger. For the request, RRC signaling may be used. In the RRC signaling, NAS signaling and/or RRC signaling related to the preconfiguration of PDU session modification and/or establishment of the non-anchor NW may be included, or NAS signaling and/or RRC signaling related to PDU session modification and/or release of the anchor NW may be included. The UE may perform establishment and/or modification of the PDU session with the non-anchor NW, or may perform release and/or modification of the PDU session with the anchor NW, with the RRC signaling being a trigger. The UE may transmit a response to the request for PDU session release or modification to the anchor base station. The anchor base station may notify the anchor AMF of the response from the UE.

The anchor AMF may notify the anchor SMF of the response from the UE.

The notification from the NW to the UE may be performed from the switching target NW, for example, the non-anchor NW. Consequently, for example, reliability of signaling related to NW switching can be enhanced.

The NF of the switching target NW may activate path switching from the anchor NW to the non-anchor NW, or may activate path switching from the non-anchor NW to the anchor NW. The switching target NW may be the anchor NW, or may be the non-anchor NW. The method disclosed in the present embodiment may be applied to the path switching described above. The NF may be the non-anchor SMF, for example.

For the predetermined condition, a validity period may be provided, or a validity deadline may be provided. The validity period or the validity deadline may be included in the predetermined condition.

When the predetermined condition is not satisfied even after expiration of the validity period or the validity deadline, the preconfiguration of path switching may be canceled. The NF (e.g., the SMF) of the anchor NW may notify the NF (e.g., the SMF) of the NW as a switching target candidate of information on validity period or validity deadline expiration, or may notify the NF of information on cancellation of the preconfiguration. The NF as a switching target candidate may release the preconfiguration, with the notification being a trigger.

The NF of the anchor NW may notify the NF (e.g., the SMF) of the switching source NW of information on expiration of the validity period or the validity deadline, or may notify the NF of information on cancellation of the preconfiguration. The NF of the switching source NW may cancel the preconfiguration of NW release, with the notification being a trigger. Consequently, for example, the switching source NW can continue communication with the UE.

As another solution, the UE may perform determination of the predetermined condition. The NF of the anchor NW may determine the condition and notify the UE thereof, the NF of the non-anchor NW may determine the condition and notify the UE thereof, the NF of the switching source NW may determine the condition and notify the UE thereof, or the NF of the NW as a switching target candidate may determine the condition and notify the UE thereof. The NF may be the SMF, for example. The notification may be performed via the AMF, or may be performed via the base station. The UE may perform measurement as to whether the predetermined condition is satisfied, with the notification being a trigger.

The anchor AMF may notify the UE of information on the preconfiguration of NW switching. The notification may be performed by using NAS signaling, for example. The UE may perform QoS monitoring, or may perform measurement of QoE, by using the notified information.

The UE may transmit a notification related to the predetermined condition to the NF of the NW. The NW may be the anchor NW, may be the non-anchor NW, may be the switching source NW, or may be the switching target NW. The NF may be the SMF, for example. The notification may be a notification that the predetermined condition is satisfied, or may be a notification that the condition is not satisfied for a predetermined validity period, for example. The notification may be performed via the base station, or may be performed via the AMF. The NF may perform NW switching, or may cancel the preconfiguration, with the notification being a trigger. For example, the NW switching may be performed with the notification that the predetermined condition is satisfied being a trigger, or the preconfiguration may be cancelled with the notification that the condition is not satisfied for the predetermined validity period being a trigger. For performing of the NW switching, for example, the method disclosed in the solution described above may be used. For cancellation of the preconfiguration, for example, the method disclosed in the solution described above may be used.

According to the third embodiment, NW switching can be performed in short time, and resources of the NW, for example, memory usage, can be saved.

### First Alteration of Third Embodiment.

A plurality of NWs as candidates of the NW switching target may be provided. The anchor NW may perform a configuration of the candidates. The anchor NW may perform a preconfiguration for the plurality of NWs.

The anchor SMF may activate the configuration, for example. The anchor SMF may instruct the SMF of the NW as a candidate to perform a preconfiguration. In the instruction, information on a condition of switching may be included. The condition may be different between the NWs. The condition may be determined by the anchor PCF, or may be determined by the anchor SMF, for example. The NW as a candidate may perform a preconfiguration of connection with the UE by using the information. The preconfiguration may be performed with a method similar to the method disclosed in the third embodiment, for example.

The UE may start connection processing with the NW satisfying the condition. The UE may notify the NF (e.g., the anchor SMF) of the anchor NW of information on the NW satisfying the condition. As another example, the NW satisfying the condition may notify the NF (e.g., the anchor SMF) of the anchor NW that connection with the UE has been started.

The anchor NW may notify the SMF of the NW satisfying the condition that the condition is satisfied. The NW satisfying the condition may start connection processing with the UE. The connection processing with the UE may be performed with a method similar to the method disclosed in the third embodiment, for example.

The anchor NW may notify the SMF of a candidate NW other than the NW satisfying the condition that the condition is not satisfied, or may notify the SMF that the condition is satisfied by another NW. The candidate NW may release connection preparation with the UE, with the notification from the anchor SMF being a trigger. The candidate NW may notify the anchor SMF that the release has been terminated.

Priorities may be provided among the plurality of candidates. Consequently, for example, the switching target NW when the conditions for the plurality of NWs are simultaneously satisfied can be uniquely determined, and as a result, malfunctions of the communication system can be prevented.

According to the first alteration, flexible switching of the communication system can be performed.

The NW apparatus in the present disclosure may be the NF of the NW. For example, the anchor NW apparatus may be the NF of the anchor NW. The non-anchor NW apparatus may be the NF of the non-anchor NW. Consequently, for example, even when a plurality of NFs of the NW are accommodated in the same apparatus, the method described in the present disclosure can be applied.

The method described in the present disclosure may be used in a condition other than a NW failure. For example, it may be used in QoS degradation. NW failure detection described in the present disclosure may be QoS degradation detection. Consequently, for example, operation of UPF switching and/or NW switching can be performed before communication is interrupted, and as a result, availability of a communication NW can be enhanced.

As another example, the method described in the present disclosure may be used in a predetermined condition. The predetermined condition may be an increase in a load of the UPF, or may be an increase in a load of the AMF, for example. Consequently, for example, a further increase in a load of the UPF and AMF can be prevented, and as a result, a failure of the NW can be prevented.

In the present disclosure, signaling between different NWs may be performed via the SEPP (see NPL 10). Consequently, for example, security in the signaling can be secured.

In the present disclosure, an inter PLMN user plane security (IPUPS) function (see NPL 10) may be used for transfer of user data between different NWs. Consequently, for example, security in transfer of user data can be secured.

Transmission and reception between the base station and a CN node (except the AMF) may be performed via the AMF. As another method, transmission and reception between the base station and a CN node (except the AMF) may be performed without using the AMF. By not using the AMF, the signaling amount can be reduced, and a load of the AMF can be reduced.

In the present disclosure, the node may be a function.

In the communication system according to the present disclosure, one or a plurality of cells may be configured in one gNB. In the present disclosure, although there is a description of the gNB or the cell, it may be the gNB or may be the cell, unless otherwise specifically noted.

In the present disclosure, the gNB may be the MCG or the SCG.

The embodiments and their alterations described above are merely illustrative, and the embodiments and their alterations can be freely combined. Any component in the embodiments and their alterations can be modified or omitted as appropriate.

For example, in the embodiments and their alterations described above, a slot is an example of a time unit of communication in the fifth generation communication system. The slot may be a scheduling unit. In the embodiments and their alterations described above, processing described to be performed in a slot unit may be performed in a TTI unit, a subframe unit, a sub-slot unit, or a mini-slot unit.

For example, the methods disclosed in the embodiments and their alterations described above may be applied to the IAB. They may be applied to communication between the IAB donor and the IAB node. They may be applied to processing using Uu in the IAB.

### Reference Signs List

- 202: Communication terminal apparatus (mobile terminal),
- 210: Communication system,
- 213, 240-1, 240-2, 750: Base station apparatus (NR base station, base station),
- 214: 5G core unit,
- 215: Central unit,
- 216: Distributed unit,
- 217: Control-plane central unit,
- 218: User-plane central unit,
- 219: TRP,
- 301, 403: Protocol processing unit,
- 302: Application unit,
- 304, 405: Encoder unit,
- 305, 406: Modulating unit,
- 306, 407: Frequency converting unit,
- 307-1 to 307-4, 408-1 to 408-4: Antenna,
- 308, 409: Demodulating unit,
- 309, 410: Decoder unit,
- 310, 411, 526: Control unit,
- 401: EPC communication unit,
- 402: Other base station communication unit,
- 412: 5GC communication unit,
- 521: Data network communication unit,
- 522: Base station communication unit,
- 523: User plane communication unit,
- 523-1: PDU processing unit,
- 523-2: Mobility anchoring unit,
- 525: Control plane control unit,
- 525-1: NAS security unit,
- 525-2: Idle state mobility management unit,
- 527: Session management unit,
- 527-1: PDU session control unit,
- 527-2: UE IP address assigning unit,
- 751-1 to 751-8: Beam,
- 752: Cell.

## Claims

1. A communication system supporting a fifth generation radio access system, the communication system comprising:
an anchor network being a network having a user plane function that directly connects to a data network as a data transmission and reception target of a communication terminal, and a non-anchor network being a network that connects to the data network via the anchor network, wherein
a plurality of protocol stacks for the communication terminal and the data network to communicate with each other are provided, and
the communication terminal is configured to, when the communication terminal switches the network to be connected to, by using the plurality of protocol stacks, transition to a state of performing communication with the data network by connecting to both of the anchor network and the non-anchor network, and then terminate communication with the data network via a switching source network.

2. The communication system according to claim 1, wherein
the communication terminal is configured to notify the network of a data transmission target of information on a sequence number of uplink data to be transmitted in data transmission to the data network.

3. The communication system according to claim 2, wherein
in the state of performing communication with the data network by connecting to both of the anchor network and the non-anchor network, the communication terminal is configured to determine which of the anchor network and the non-anchor network a transmission target of the uplink data is, based on a buffer amount of the uplink data in each of the plurality of protocol stacks.

4. The communication system according to claim 2, wherein
in the state in which the communication terminal performs communication with the data network by connecting to both of the anchor network and the non-anchor network, the anchor network or the non-anchor network is configured to determine which of the anchor network and the non-anchor network a transmission target of the uplink data is, based on one or both of failure detection and congestion detection of the anchor network and the non-anchor network, and indicate the transmission target to the communication terminal.

5. The communication system according to any one of claims 1 to 4, wherein
a configuration used in communication with the communication terminal is performed in advance for each function included in the network as a candidate of a switching target when the network to which the communication terminal is to be connected is switched.

6. The communication system according to claim 5, wherein
a plurality of networks as the candidates are present, and the configuration for each function included in the network is performed in advance for all of the plurality of networks as the candidates.
